# EUROPÄISCHE PATENTSCHRIFT

(11) **EP 4 249 356 B1**
(45) Veröffentlichungstag und Bekanntmachung des Hinweises auf die Patenterteilung: **04.06.2025**
(21) Anmeldenummer: 23164040.0
(22) Anmeldetag: 24.03.2023
(51) Int. Cl.: B62J 50/23, B62J 6/03, B62J 11/00, B62J 99/00

(54) **KURVENADAPTIVE HALTERUNG FÜR FUNKTIONSELEMENTE FÜR FAHRZEUGE MIT GABELLENKUNG**
CURVE-ADAPTIVE RETAINER FOR FUNCTIONAL ELEMENTS FOR VEHICLES WITH FORK-STEERING
SUPPORT ADAPTATIF EN COURBE POUR ÉLÉMENTS FONCTIONNELS DE VÉHICULES À DIRECTION À FOURCHE

(30) Priorität: 24.03.2022 DE 102022202867
(43) Veröffentlichungstag der Anmeldung: 27.09.2023
(73) Patentinhaber: Gerlinger, Wolfgang, 67117 Limburgerhof (DE)
(72) Erfinder: Gerlinger, Wolfgang, 67117 Limburgerhof (DE)

(56) Entgegenhaltungen:
- DE-A1- 102004 041 157
- DE-C- 808 027

## Beschreibung

### Technisches Gebiet

Die Erfindung betrifft einen Halter zur Anpassung einer Ausrichtung eines zu haltenden Funktionselements an eine Lenkstellung eines Fahrzeugs mit Gabellenkung. Weiterhin betrifft die Erfindung einen Datenträger, einen Druckdatensatz und ein Computerprogramm. Des Weiteren betrifft die Erfindung ein Fahrzeugsystem sowie ein Fahrzeug mit Gabellenkung. Vorrichtungen der genannten Art können beispielsweise im Bereich der Fahrzeugtechnik eingesetzt werden, insbesondere im Bereich der Fahrzeugsicherheitstechnik. So kann die Erfindung insbesondere im Straßenverkehr eingesetzt werden. Auch andere Einsatzgebiete sind jedoch grundsätzlich denkbar.

### Technischer Hintergrund

In der Fahrzeugsicherheitstechnik spielt die Ausrichtung von Funktionselementen, insbesondere von optischen Systemen, beispielsweise von Beleuchtungs- oder Kamerasystemen, und von Sensoren, eine wichtige Rolle, da deren Ausrichtung generell entscheidend für deren Nutzen ist. So ist insbesondere in Bezug auf die Beleuchtung von Fahrzeugen, die allgemeine Sicherheit, beispielsweise im Straßenverkehr, typischerweise nicht nur davon abhängig, ob das betreffende Fahrzeug von anderen Verkehrsteilnehmern gesehen werden kann, sondern auch von der Ausleuchtung und/oder Erfassung der zu befahrenden Fahrbahn sowie des umliegenden Verkehrs abhängig. Insbesondere beim Befahren von Kurven oder Ecken ist die herkömmlich durch die Position eines Rahmens oder Chassis bestimmte Ausrichtung von Funktionselementen, beispielsweise von optischen Systemen und Sensoren, typischerweise unzureichend für das Erfassen und/oder Ausleuchten der zu befahrenden Fahrbahn.

Zur Verbesserung der Ausleuchtung sind aus dem Stand der Technik zahlreiche Vorrichtungen bekannt. So werden beispielsweise kurvenadaptive Scheinwerfer vorgeschlagen.

Beispielsweise beschreibt die US 982,803 A eine Leuchte für ein Fahrzeug, mit einem beweglich gelagerten Brenner, dessen Licht bei einer Richtungsänderung eines Fahrzeugs, insbesondere in Kurven, abgelenkt werden kann.

In US 1,524,443 A wird eine Vorrichtung beschrieben, bei der sich die Lichter automatisch mit der Drehung der Vorderräder eines Fahrzeugs drehen, so dass die Lichtstrahlen immer vor das Fahrzeug geworfen werden, sowohl bei Kurvenfahrt als auch bei Geradeausfahrt.

Die US 3,614,416 A beschreibt eine Beleuchtungseinrichtung für Straßenfahrzeuge mit einem Gestänge zum Schwenken des Scheinwerfers in Bezug auf die Fahrtrichtung des Fahrzeugs und mit Mitteln, die auf die Wankbewegung des Fahrzeugs ansprechen, um die Neigung der Schwenkachse der Scheinwerfer zu ändern und die Scheinwerfer zum Ausgleich der Wankbewegung nach unten und innen zu drehen. In einer abgewandelten Ausführungsform werden Mittel verwendet, die auf die Geschwindigkeit des Fahrzeugs ansprechen, um die Neigung der Schwenkachse der Scheinwerfer zu ändern, wenn das Lenkrad gedreht wird.

DE 10 2019 006 157 A1 beschreibt ein Scheinwerfersystem für ein Fahrrad oder E-Bike oder E-Scooter, umfassend einen Scheinwerfer mit einem Gehäuse, mehrere Leuchteinheiten und wenigstens zwei Leuchteinheiten die im Betrieb getrennt aktivierbar und deaktivierbar sind, so dass mittels der wenigstens zwei getrennt aktivierbar und deaktivierbaren Leuchteinheiten unterschiedliche Abstrahlcharakteristiken erzeugbar sind und einen Reflektor zur Reflexion des von den Leuchteinheiten abgestrahlten Lichtes, eine Steuer- und/oder Regeleinheit zum Umschalten zwischen den zwei Abstrahlcharakteristiken mittels einer Funkverbindung zwischen der Steuer- und/oder Regeleinheit und einer Schalteinheit, bei einer Unterbrechung der Funkverbindung zwischen der Schalteinheit und der Steuer- und/oder Regeleinheit wird eine Blendung des Gegenverkehrs aufgrund des aktiven Fernlichtes des Scheinwerfersystems vermieden, wobei das Scheinwerfersystem, insbesondere die Steuer- und/oder Regeleinheit, dahingehend ausgebildet ist, dass bei einer Unterbrechung der Funkverbindung zwischen der Steuer- und/oder Regeleinheit und der Schalteinheit das Scheinwerfersystem selbsttätig in eine bestimmte Abstrahlcharakteristik umschaltet.

DE 20 2016 101 707 U1 beschreibt ein Scheinwerfer für ein Fahrrad, umfassend mindestens ein Leuchtmittel, dessen Licht zumindest teilweise aus dem Scheinwerfer austreten kann, wobei der Scheinwerfer so gestaltet ist, dass die Lichtverteilung des aus dem Scheinwerfer austretenden Lichts verändert werden kann, dadurch gekennzeichnet, dass der Scheinwerfer Steuermittel umfasst, die die Lichtverteilung des von dem Scheinwerfer ausgehenden Lichts in Abhängigkeit von erfassten Messwerten ändern können.

Die DE 808 027 C offenbart einen Halter zur Anpassung einer Ausrichtung eines zu haltenden Funktionselements an eine Lenkstellung eines Fahrzeugs mit Gabellenkung gemäß dem Oberbegriff des Anspruchs 1.

Trotz der mit den beschriebenen Vorrichtungen erzielten Vorteile bestehen nach wie vor zahlreiche technische Herausforderungen und Nachteile. So sind die bekannten Vorrichtungen in der Regel komplex und mit erheblichem Zusatzgewicht verbunden. Bei Fahrzeugen mit Gabellenkung ist das Gewicht des Fahrzeugs ein wichtiges Merkmal. Geringeres Gewicht bedeutet einfacheres Handling beim Schieben und weniger Kraftaufwand beim Fahren. Insbesondere für Fahrzeuge ohne zusätzlichen Motor, aber auch für Fahrzeuge mit Elektromotor ist dies wichtig. Darüber hinaus ist die Verwendung von komplexer Elektronik fehleranfällig und kann zu teuren Reparaturen führen. Insbesondere benötigen die bekannten Vorrichtungen typischerweise zusätzliche Elektronik oder zusätzliche Bauelemente. Diese zusätzlichen Bauelemente wie beispielsweise Prismen oder Spiegel, zusätzliche Kabel, Scheinwerfer, Sensoren und/oder Leuchtmittel, können ausfallen und vermehren somit den Wartungsaufwand und erhöhen die Herstellkosten und das Gewicht der Vorrichtung.

Zudem haben herkömmliche Vorrichtungen im Allgemeinen einen hohen Energiebedarf, beispielsweise für zusätzliche Elektronik oder für eine stärkere Ausleuchtung eines großflächigeren Bereichs der Fahrbahn. Insbesondere bei einer großflächigeren Beleuchtung ergibt sich weiterhin der Nachteil, dass auch Bereiche neben der Fahrbahn, beispielsweise den Gegenverkehr betreffende Bereiche, ausgeleuchtet werden. Eine großflächige Beleuchtung kann daher generell die Gefahr bergen, dass andere Verkehrsteilnehmer geblendet werden und somit die Sicherheit aller beteiligten Verkehrsteilnehmer verringert wird.

### Aufgabe der Erfindung

Es wäre daher wünschenswert, Vorrichtungen bereitzustellen, welche die Nachteile bekannter Vorrichtungen zumindest weitgehend vermeiden. Insbesondere sollen die Vorrichtungen einerseits wenig komplex, wartungsarm, leicht und energiesparend sein und andererseits eine zuverlässige und sichere Ausrichtung von Funktionselementen ermöglichen.

### Allgemeine Beschreibung der Erfindung

Diese Aufgabe wird adressiert durch einen Halter zur Anpassung einer Ausrichtung eines zu haltenden Funktionselements an eine Lenkstellung eines Fahrzeugs mit Gabellenkung, einen Datenträger, einen Druckdatensatz, ein Computerprogramm, ein Fahrzeugsystem, sowie durch ein Fahrzeug mit Gabellenkung, mit den Merkmalen der unabhängigen Patentansprüche. Vorteilhafte Weiterbildungen, welche einzeln oder in beliebiger Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nichtausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten, die hierdurch eingeleiteten Merkmale mit anderen Merkmalen zu kombinieren, seien es optionale oder nicht-optionale Merkmale, unangetastet bleiben.

In einem ersten Aspekt der vorliegenden Erfindung wird ein Halter zur Anpassung einer Ausrichtung eines zu haltenden Funktionselements an eine Lenkstellung eines Fahrzeugs mit Gabellenkung vorgeschlagen. Der Halter umfasst:
- mindestens ein Steuerungselement, wobei das Steuerungselement zumindest teilweise ein Lenkrohr der Gabellenkung des Fahrzeugs umfasst oder mit dem Lenkrohr direkt oder mittelbar starr verbindbar ist;
- mindestens ein gegenüber dem Steuerungselement drehbar angeordnetes Drehelement; und
- mindestens ein mit dem Drehelement verbundenes Halteelement an dem das zu haltende Funktionselement befestigbar ist.

Das Drehelement und das Steuerungselement sind derart angeordnet, dass eine durch eine Einlenkbewegung des Steuerungselements bewirkte Drehbewegung des Drehelements eine die Einlenkbewegung verstärkende Bewegung des Halteelements bewirkt.

Der Begriff "Halter", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Vorrichtung zur Abstützung und/oder Befestigung des Funktionselements beziehen. Insbesondere kann der Halter eingerichtet sein, um das Funktionselement in einer vorbestimmten Bahn zu führen und/oder zu tragen und abhängig von einer Lenkstellung, beispielsweise einer Lenkstellung des Fahrzeugs mit Gabellenkung, die Ausrichtung des Funktionselements zu bestimmen, beispielsweise das Funktionselement in vorbestimmter Weise auszurichten. Beispielsweise kann der Halter rein mechanisch sein, also insbesondere seine Funktion erfüllen ohne elektrische Energie zu benötigen. Der Halter umfasst mehrere Elemente, welche beispielsweise mechanisch verbunden sein können, insbesondere reversibel.

Der Begriff "Fahrzeug mit Gabellenkung", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein mindestens zwei Räder umfassendes Landfahrzeug das eine Steuerkopflenkung aufweist beziehen. So kann das Fahrzeug mit Gabellenkung einen Rahmen, insbesondere einen ein Steuerrohr umfassenden Rahmen, sowie ein Lenkrohr, beispielsweise ein mit einer Gabel verbundenes Lenkrohr, umfassen. Insbesondere können dabei das Lenkrohr, beispielsweise über einen Gabelschaft mit der Gabel oder mit einer Schwinge verbundenes Lenkrohr, in dem Steuerrohr des Rahmens angeordnet und in diesem drehbar gelagert sein. Die Fahrtrichtung kann bei dem Fahrzeug mit Gabellenkung über ein Verdrehen des Lenkrohrs beeinflusst werden, insbesondere über ein Einlenken eines mit dem Lenkrohr verbundenen Lenkers. So wird das Verdrehen des Lenkrohrs, beispielsweise über die Gabel, an eines der mindestens zwei Räder übertragen und auf diese Weise dessen Ausrichtung und/oder Stellung verändert.

Der Begriff "Steuerungselement", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein beliebiges Bauteil oder Gegenstand beziehen, dessen Bewegung eine Bewegung mindestens eines weiteren Bauteils oder Gegenstands bewirkt und/oder vorgibt. So kann das Steuerungselement beispielsweise eine Position des Drehelements vorgeben und/oder steuern. Beispielsweise kann das Steuerungselement das Lenkrohr der Gabellenkung des Fahrzeugs umfassen. So kann insbesondere das Steuerungselement das Lenkrohr der Gabellenkung sein. Beispielsweise können das Steuerungselement und das Lenkrohr integral, insbesondere einstückig, ausgebildet sein. Alternativ oder zusätzlich, kann das Steuerungselement starr mit dem Lenkrohr verbunden sein, beispielsweise eine Oberfläche des Lenkrohrs umfassen, oder mit dieser verbindbar sein. Weiterhin alternativ oder zusätzlich, kann das Steuerungselement mit dem Lenkrohr direkt oder mittelbar starr verbindbar sein, vorzugsweise reversibel, beispielsweise direkt oder mittelbar. So kann das Steuerungselement insbesondere mindestens ein von dem Lenkrohr separat existierendes Bauteil oder Gegenstand sein, welches derart mit dem Lenkrohr starr verbindbar ist, dass eine Bewegung des Lenkrohrs auch eine Bewegung des Steuerungselements umfasst.

Der Begriff "starr verbindbar", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Eignung eines Gegenstands beziehen mit einem anderen Gegenstand verbunden zu werden, ohne dass die Verbindung eine Relativbewegung zwischen den Gegenständen ermöglicht. Die starre Verbindung, insbesondere geeignet zur Kraftübertragung, kann beispielsweise auf einer kraftschlüssigen, formschlüssigen und/oder stoffschlüssigen Verbindung zwischen den Gegenständen beruhen. So kann insbesondere das mit dem Lenkrohr starr verbindbare Steuerungselement derart ausgestaltet sein, um kraft-, form- und/oder stoffschlüssig direkt oder mittelbar an dem Lenkrohr montiert zu werden. Beispielsweise kann das Steuerungselement mittels einer Klemm- und/oder Schraubverbindung direkt oder mittelbar an dem Lenkrohr befestigbar sein, auch eine Steckverbindung, eine geschweißte oder geklebte Verbindung oder eine beliebige andere zur Kraftübertragung geeignete Verbindung ist möglich. Auch eine starre Verbindung des Steuerungselements mit einem anderen, starr mit dem Lenkrohr verbundenen Gegenstand, beispielsweise mit einem Lenker und/oder einer Gabel, kann eine starre Verbindung zwischen Steuerungselement und Lenkrohr sein.

Der Begriff "verbindbar mit dem Lenkrohr" bzw. "verbunden mit dem Lenkrohr" bzw. "verbindbar mit dem Rahmen" bzw. "verbunden mit dem Rahmen", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere bedeuten, dass eine direkte oder mittelbare starre Verbindung mit dem Lenkrohr bzw. dem Rahmen besteht. Beispielsweise umfassen die Begriffe "verbindbar mit dem Lenkrohr" bzw. "verbunden mit dem Lenkrohr" jede starre Verbindung mit dem Lenker, mit der Lenkgabel, dem Gabelschaft, insbesondere mit den vorgesehenen Löchern und Schrauben für handelsübliche Fahrradscheinwerfer, mit einem handelsüblichen Halter für einen Fahrradscheinwerfer, mit einem mit dem Lenker starr verbundenen Cockpit für Zubehörteile oder mit anderen starr verbundenen Gegenständen. Insbesondere kann bei Fahrzeugen mit Gabellenkung auch eine Verbindung mit einer Ahead-Klemme oder einer anderen Klemme im Lenkrohr bedeuten. Insofern ist insbesondere dann eine Verbindung mit dem Lenkrohr gegeben, wenn eine Rotationsbewegung des Lenkrohrs eine analoge Rotation des verbundenen Teils um denselben Winkel verursacht. Beispielsweise umfassen die Begriffe "verbindbar mit dem Rahmen" oder "verbunden mit dem Rahmen" eine Verbindung mit dem Steuerrohr, mit einem Trägerelement.

Beispielsweise können das Drehelement und das Halteelement integral, insbesondere einstückig, ausgebildet sein. Alternativ oder zusätzlich, kann das Halteelement starr mit dem Drehelement verbunden sein, vorzugsweise reversibel, beispielsweise direkt oder mittelbar. Weiterhin alternativ oder zusätzlich, kann das Halteelement mit dem Drehelement derart verbunden sein, dass eine Relativbewegung in zumindest einem Freiheitsgrad möglich ist, beispielsweise eine Schwenkbewegung, zum Beispiel zur Einstellung einer Neigung des Funktionselements.

Der Begriff "Einlenkbewegung", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine beliebige Lenkbewegung beziehen, welche eine von einer Geradeausfahrt abweichenden Fahrtrichtung des Fahrzeugs bewirkt. Insbesondere kann die Einlenkbewegung des Steuerungselements ein Verdrehen des Lenkrohrs nach links oder rechts umfassen. So kann die Einlenkbewegung beispielsweise eine Rotation um einen Winkel α, dem sogenannten Lenkwinkel, > 0° im Uhrzeigersinn oder gegen den Uhrzeigersinn, im Vergleich zu einer neutralen, geradeaus gerichteten Lenkstellung sein. Die Einlenkbewegung kann sich insbesondere auf eine Lenkbewegung des Fahrzeugs mit Gabellenkung beziehen, welche ausgeführt wird, wenn das Fahrzeug eine Kurve, beispielsweise eine Linkskurve oder eine Rechtskurve, fahren bzw. ausführen soll.

Der Begriff "Lenkwinkel", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Verdrehen des Lenkrohrs um einen Winkel α im Uhrzeigersinn oder gegen den Uhrzeigersinn beziehen. Der Begriff "Lenkwinkelbereich" kann eine Rotation von einem Lenkwinkel α=α₁ zu einem größeren Lenkwinkel α=α₂, wobei α₁ und α₂ dieselbe Rotationsrichtung im Vergleich zu der geradeaus gerichteten Lenkstellung beschreiben.

Das Drehelement und das Steuerungselement sind insbesondere derart angeordnet, dass die durch die Einlenkbewegung des Steuerungselements bewirkte Drehbewegung des Drehelements, insbesondere um mindestens eine Drehachse, eine die Einlenkbewegung verstärkende Bewegung des Halteelements bewirkt und/oder steuert. In diesem Zusammenhang kann insbesondere der Begriff "eine die Einlenkbewegung verstärkende Bewegung" sich auf eine Rotation, beispielsweise eine Drehbewegung, um einen Winkel β > α, dem sogenannten Ausrichtungswinkel des Funktionselements, beziehen. So können insbesondere das Steuerungselement und das Drehelement, sowie das mit dem Drehelement verbunden Halteelement, derart angeordnet sein, dass ein Verdrehen des Lenkrohrs, ausgehend von einer neutralen, geradeaus gerichteten Lenkstellung, um den Winkel α im Uhrzeigersinn oder gegen den Uhrzeigersinn, ein Verdrehen des Halteelements um den Winkel β, ebenfalls im oder gegen den Uhrzeigersinn, bewirkt, wobei β > α. So kann die Anordnung der Elemente des Halters, insbesondere die Anordnung des Steuerungselements, des Drehelements und des Halteelements, beispielsweise bewirken, dass ein an dem Halteelement befestigtes Funktionselement durch die Rotation des Steuerungselements um α > 0°, von seiner ursprünglichen Ausrichtung Einlenkbewegung verstärkende Bewegung gleichgerichtet sein wie die Einlenkbewegung selbst. So kann die im Uhrzeigersinn gerichtete Einlenkbewegung im Uhrzeigersinn verstärkt werden, wohingegen die entgegen dem Uhrzeigersinn gerichtete Einlenkbewegung auch entgegen dem Uhrzeigersinn verstärkt werden kann. Ist das Halteelement über das Drehelement mit dem Lenkrohr verbunden, so führt es einen Teil seiner Rotation mit der Einlenkbewegung um den Lenkwinkel durch. Um eine Rotation des Halteelements um den Winkel β zu erreichen, kann das Drehelement eine Rotation circa um den Winkel β-α ausführen.

Insbesondere kann das Drehelement derart angeordnet sein, dass es die Drehbewegung um einen Rahmen des Fahrzeugs oder um mindestens ein starr mit dem Rahmen verbindbares Trägerelement ausführt. So kann das Drehelement derart angeordnet sein, dass es eine Drehbewegung um den Rahmen des Fahrzeugs, insbesondere um eine gegenüber dem Rahmen des Fahrzeugs räumlich fixierte Drehachse, ausführen kann. Die mindestens eine Drehachse des Drehelements kann dabei insbesondere senkrecht zu einer Fahrtrichtung des Fahrzeugs mit Gabellenkung ausgerichtet sein. Ist das Halteelement über das Drehelement und dem Trägerelement mit dem Rahmen verbunden, so führt es nicht einen Teil seiner Rotation mit der Einlenkbewegung um den Lenkwinkel durch. Um eine Rotation des Halteelements um den Winkel β zu erreichen, kann das Drehelement eine Rotation circa um den Winkel β ausführen.

Zum Beispiel kann das Drehelement um das Steuerungselement gelagert sein, beispielsweise derart, dass eine Bewegung zwischen dem Drehelement und dem Steuerungselement in mindestens drei Freiheitsgraden, insbesondere in mindestens vier Freiheitsgraden, beispielsweise in fünf Freiheitsgraden, zumindest eingeschränkt ist. Alternativ kann das Drehelement um das Trägerelement gelagert sein, beispielsweise derart, dass eine Bewegung zwischen dem Drehelement und dem Trägerelement in mindestens drei Freiheitsgraden, insbesondere in mindestens vier Freiheitsgraden, beispielsweise in fünf Freiheitsgraden, zumindest eingeschränkt ist.

Der Halter kann weiterhin mindestens ein Übertragungselement zur Übertragung der Bewegung, insbesondere der Einlenkbewegung, des Steuerungselements auf das Drehelement umfassen. So kann eine Drehbewegung des beispielsweise auf dem Trägerelement gelagerten Drehelements insbesondere mittels des Übertragungselements von der Bewegung des Steuerungselements gesteuert und/oder bewirkt werden. Beispielsweise kann sich eine Drehung des Steuerungselements, also die Einlenkbewegung, mittels des Übertragungselements auf das Drehelement übertragen.

Das mindestens eine Übertragungselement kann insbesondere zur Übertragung einer Drehbewegung des Steuerungselements auf das Drehelement eingerichtet sein. Beispielsweise kann das Übertragungselement ausgewählt sein aus der Gruppe bestehend aus: einem Zahnrad; einem Reibrad; einer Zahnscheibe; einer Kette, beispielsweise einer Zahnkette; einem Riemen, beispielsweise einem Zahnriemen; einer Schnur; einem Gummizug; einem Bowdenzug; einer Bowdenzugseele; einer Bowdenzughülle; einem Band; einem Kegelzahnrad; einem Kegelreibrad; einem Sektor eines Kegelzahnrads; einem Sektor eines Kegelreibrads; einer Zahnschiene; einer Kardanwelle. Dabei sind verschiedene Zahnformen möglich, wie beispielsweise bogenverzahnt, pfeilverzahnt oder doppelschrägverzahnt. Das Übertragungselement kann auch als hydraulisches Übertragungselement ausgebildet sein. Das mindestens eine Übertragungselement kann eine eigene Drehachse aufweisen. Dies ist jedoch nicht zwingend erforderlich. Beispielsweise kann durch Umlenkungen und Lagerungen kann mit einem Übertragungselement in Form einer Flaschenzugsähnlichen Konstruktion auch eine Änderung des Übersetzungsverhältnisses bewirkt werden. Beispielsweise sind auch weitere mechanische Elemente zur Übertragung einer Bewegung als Übertragungselement möglich.

Der Halter kann als Umlaufgetriebe ausgebildet sein. Insbesondere kann der Halter als Planetengetriebe ausgebildet sein. Dabei kann das Steuerungselement als Planetenradträger ausgebildet sein, das Abrollelement als Sonnenrad ausgebildet sein, mehrere Übertragungselemente können als Planetenräder ausgebildet sein und das Drehelement kann als Hohlrad ausgebildet sein. Planetengetriebe erlauben eine kompakte Bauweise und weisen eine geringe Unwucht auf. In diesem Fall sorgen die Planetenräder für einen Leichtlauf und sie werden automatisch zwischen Sonnen- und Hohlrad gehalten. Alternativ kann auch das Abrollelement als Hohlrad und das Drehelement als Sonnenrad ausgebildet sein.

Der Begriff "Bowdenzug", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, eine Bowdenzugseele umfassen, die sich in der Bowdenzughülle axial bewegen kann. Insbesondere können Bowdenzugseele und Bowdenzughülle nur geringe Längenänderungen in axialer Richtung erfahren, sie sind beide quer zur axialen Richtung flexibel. Da die zu übertragende Kraft zur axialen Bewegung der Bowdenzugseele in der Bowdenzughülle vergleichsweise gering ist, kann die Bowdenzughülle aus verschiedenen Materialien, wie beispielsweise aus einem Kunststoffrohr oder einem Kunststoffschlauch hergestellt sein, oder aus einem Material wie beispielsweise bei Fahrzeugen mit Gabellenkungen üblicherweise verwendete Schalt- oder Bremszüge. Die Bowdenzugseele kann ein Drahtseil, ein Draht, eine Litze, eine Schnur, eine Angelsehne, ein Seil oder ähnliches sein. Der Bowdenzug kann einseitig angebracht sein und auf Zug und Schub ausgelegt sein. In diesem Fall kann der Bowdenzug für die Rotation des Drehelements in und gegen den Uhrzeigersinn verwendet werden. Alternativ kann der Bowdenzug beidseitig angebracht sein und auf Zug ausgelegt sein. In diesem Fall kann der eine Bowdenzug für die Rotation des Drehelements im Uhrzeigersinn verwendet werden und der andere Bowdenzug für die Rotation gegen den Uhrzeigersinn. In beiden Fällen sind die Materialien und Durchmesser so aufeinander abgestimmt, dass die Bowdenzugseele sich weitgehend axial innerhalb der Bowdenzughülle bewegt. Alternativ kann ein beidseitig angebrachter Bowdenzug auch derart ausgelegt werden, dass er eine Bowdenzughülle umfasst, die gegen eine Rückstellkraft eine Längenänderung erfährt. Als Material kann in diesem Fall zum Beispiel eine vorgespannte Druckfeder verwendet werden. In diesem Fall kann mit dem Bowdenzug ein vom Lenkwinkel abhängiges Übersetzungsverhältnis erreicht werden.

Das Steuerungselement kann insbesondere zumindest teilweise fingerförmig ausgebildet sein. Der Begriff "fingerförmig", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine längliche, einem Finger ähnliche Form oder Gestalt beziehen. So kann ein fingerförmig ausgebildeter Teil des Steuerungselements, beispielsweise ähnlich einem Finger, sein. Insbesondere kann dabei das Drehelement konzentrisch um den fingerförmig ausgebildeten Teil des Steuerungselements angeordnet sein, sodass eine Bewegung des Steuerungselements eine Bewegung der Drehachse des Drehelements bewirkt. Insbesondere kann die Drehachse beispielsweise eine Achse im Zentrum des fingerförmig ausgebildeten Teils des Steuerungselements sein, zum Beispiel eine senkrecht zur Fahrtrichtung ausgebildeten Teils des Fingers. Beispielsweise kann der fingerförmige Teil des Steuerungselements auch in mindestens einem Winkel geknickt und/oder gebeugt sein, beispielsweise rechtwinklig, insbesondere derart, dass die Drehachse des Drehelements senkrecht zu einer Fahrtrichtung des Fahrzeugs mit Gabellenkung ausgerichtet ist.

Die Drehbewegung des Drehelements kann beispielsweise eine Abrollbewegung gegenüber dem Rahmen oder gegenüber einem mit dem Rahmen, insbesondere mit dem Rahmen des Fahrzeugs mit Gabellenkung, verbindbaren Abrollelement sein. So kann das Drehelement beispielsweise über eine Oberfläche des Rahmens abrollen, insbesondere eine Drehbewegung als Abrollbewegung über die Oberfläche des Rahmens ausführen. Alternativ oder zusätzlich kann das Drehelement über mindestens eine Oberfläche des Abrollelements abrollen, insbesondere eine Drehbewegung als Abrollbewegung über eine Oberfläche des Abrollelements ausführen. Dabei kann das Abrollelement mit dem Rahmen verbindbar sein, beispielsweise starr an dem Rahmen befestigt sein oder über den Rahmen gespannt sein. Insbesondere kann das Abrollelement auf und/oder um die Oberfläche des Rahmens angeordnet und befestigt sein. So kann das Abrollelement beispielsweise ein starr mit dem Rahmen verbundener Gegenstand und ein Element ausgewählt aus der Gruppe bestehend aus: einem Zahnrad, beispielsweise einem zumindest einen Teilkreis bildenden Zahnkranz; einem Reibrad, beispielsweise einem eine Reiboberfläche aufweisenden zumindest einen Teilkreis bildenden Reibkranz; einer Zahnscheibe; einer Kette, beispielsweise einer Zahnkette; einem Kegelzahnrad; Kegelreibrad; einem Sektor eines Kegelzahnrads; einem Sektor eines Kegelreibrads. Dabei sind verschiedene Zahnformen möglich, wie beispielsweise bogenverzahnt. Das Abrollelement kann insbesondere als komplementäres Gegenstück zu dem Drehelement ausgebildet sein. Alternativ oder zusätzlich kann das Abrollelement auch beweglich ausgeführt sein, beispielsweise als Bauteil ohne eigene Drehachse, als Bowdenzug, Bowdenzugseele, Bowdenzughülle, Angelsehne, Drahtseil, Litze, Schnur, Band oder Riemen. Auch weitere, eine Abrollbewegung des Drehelements ermöglichende Ausgestaltungen des Abrollelements sind denkbar. Grundsätzlich eignet sich jede Form, die ein Ineinandergreifen ermöglicht. Ein Abrollelement kann insbesondere ein Bauteil ohne eigene Drehachse sein.

Beispielsweise kann das Drehelement ausgewählt sein aus der Gruppe bestehend aus: einem Zahnrad, beispielsweise ein mindestens drei Zähne aufweisender Teilkreis, ein Sektor eines Zahnrads, ein halbes Zahnrad, und/oder ein Zahnrad mit einem konstanten oder je nach Stellung variierenden Durchmesser; einem Reibrad, beispielsweise ein als Teilkreis ausgeführtes Reibrad, ein Sektor eines Reibrads, ein halbes Reibrad, und/oder ein Reibrad mit einem konstanten oder je nach Stellung variierenden Durchmesser; einer Zahnscheibe, beispielsweise einer mindestens drei Zähne aufweisenden Zahnscheibe, ein Sektor einer Zahnscheibe, eine halbe Zahnscheibe, und/oder eine Zahnscheibe mit einem konstanten oder je nach Stellung variierenden Durchmesser; ein Kegelzahnrad; ein Kegelreibrad; ein Sektor eines Kegelzahnrads; ein Sektor eines Kegelreibrads. Dabei sind verschiedene Zahnformen möglich, wie beispielsweise bogenverzahnt, pfeilverzahnt oder doppelschrägverzahnt. Grundsätzlich eignet sich jede Form, die ein Ineinandergreifen ermöglicht.

Insbesondere kann eine Drehstellung des Drehelements, in einem vorgegebenen Übersetzungsverhältnis, der Lenkstellung des Lenkrohrs um eine Lenkachse gegenüber einem Rahmen des Fahrzeugs entsprechen. So kann insbesondere ein Verdrehen des Lenkrohrs gegenüber dem Rahmen, beispielsweise in dem Steuerrohr und um die Lenkachse des Fahrzeugs, ein Verdrehen des Drehelements entsprechend einem vorgegebenen Übersetzungsverhältnis bewirken. Der Begriff "Übersetzungsverhältnis", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Wert eines mathematischen Zusammenhangs zwischen sich gegenseitig beeinflussenden Bewegungen von mindestens zwei Gegenständen beziehen, beispielsweise ein Verhältnis aus Antrieb und Abtrieb umfassen. Insbesondere kann ein Übersetzungsverhältnis zwischen einer Drehstellung des Drehelements und einer Lenkstellung des Lenkrohrs sich auf ein Verhältnis zwischen zwei Winkeln beziehen, wobei ein erster Winkel zwischen der Lenkstellung des Lenkrohrs und der geradeaus gerichteten Lenkstellung des Lenkrohrs aufgespannt sein kann, und wobei der zweite Winkel zwischen einer Drehstellung des Drehelements jeweils bei der Lenkstellung des Lenkrohrs und der geradeaus gerichteten Lenkstellung des Lenkrohrs aufgespannt sein kann. Das Übersetzungsverhältnis i kann ein Quotient aus den Winkeln α und β umfassen, beispielsweise i = β/α. Insbesondere kann das Übersetzungsverhältnis i > 1 sein, sodass eine Bewegung des Lenkrohrs, insbesondere eine Drehung des Steuerungselements, z.B. die Einlenkbewegung, kleiner ist als die dadurch bewirkte Drehung des Drehelements und/oder des mit dem Drehelement verbundenen Halteelements. Beispielsweise kann 3 > i > 1,1 sein, insbesondere 2,5 > i > 1,2.

Zum Beispiel kann das Übersetzungsverhältnis konstant sein. Alternativ, ist auch ein variables Übersetzungsverhältnis möglich. So kann das Übersetzungsverhältnis beispielsweise abhängig sein von einer Drehstellung des Drehelements. Dabei kann beispielsweise mindestens eines der Elemente von Steuerungselement und Drehelement, einen sich entlang des Umfangs verändernden Radius, zum Beispiel einen sich verändernden Abstand zwischen Kontaktpunkt und Rotationsachse, aufweisen. So kann beispielsweise das Steuerungselement und/oder das Drehelement eine ovale oder Ei-förmige Gestalt und/oder eine Gestalt mit stufenförmiger Änderung des Radius aufweisen. Beispielsweise kann die Übersetzung bei kleinen Lenkwinkeln größer sein als bei großen Lenkwinkeln. Damit lässt sich erreichen, dass das Funktionselement bei kleinen Lenkwinkeln ausreichend in Richtung der Kurve ausgerichtet ist, ohne bei großen Lenkwinkeln zu stark in Richtung der Kurve ausgerichtet zu sein. Beispielsweise ist es vorteilhaft, bei kleinen Lenkwinkeln ein Übersetzungsverhältnis von >2, vorzugsweise >2,5, zu realisieren und gleichzeitig bei großen Lenkwinkeln von 90° die Ausrichtung des Funktionselements auf <180° zu beschränken. Anhand der Bauteile ausgewählt aus der Gruppe bestehend aus Steuerungselement, Drehelement, Abrollelement und/oder Übertragungselement sind konstante Übersetzungsverhältnisse in bestimmten Lenkwinkelbereichen zu realisieren. Insbesondere kann die durch die Einlenkbewegung des Steuerungselements verstärkende Bewegung des Halteelements von einer Lenkstellung des Lenkrohrs abhängen, wobei die verstärkende Bewegung des Halteelements insbesondere in einem Lenkwinkelbereich von 1° bis 25° größer ist, als in einem Lenkwinkelbereich von 45° bis 90° und insbesondere in einem Abschnitt eines Lenkwinkelbereichs eine konstante Übersetzung der Rotationsbewegung des Drehelements und der Rotationsbewegung des Lenkrohrs aufweist. Insbesondere vorteilhaft ist ein Übersetzungsverhältnis von >2, vorzugsweise >2,5 in einem Abschnitt des Lenkwinkelbereichs von 1° bis 25°. Insbesondere vorteilhaft ist ein Übersetzungsverhältnis <2, vorzugsweise <1,8, in einem Abschnitt des Lenkwinkelbereichs von 45° bis 90°.

Die Lenkachse ist bei Fahrzeugen mit Gabellenkung relativ zu einer Vertikalen nach hinten geneigt. Geometrisch festgelegt wird der sogenannte Nachlauf durch Laufradradius, Steuerkopfwinkel zwischen Steuerkopfachse und Boden und der Gabelbiegung, d.h. senkrechter Abstand von Nabe zur Steuerkopfachse. Der Nachlauf ist eine wichtige bauliche Unterstützung im Bemühen gegen das Umfallen während des Geradeausfahrens. Die Neigung der Lenkachse bei Straßenrädern gegenüber der Vertikalen beträgt ca. 15° bis 30° Grad nach hinten. Die Gründe dafür sind, dass ein kleiner Lenkkopfwinkel die Spurtreue verstärkt. Bei einem Funktionselement, welches eine vorbestimmte Neigung im Raum aufweist, ist ein Abstand von einem Schnittpunkt einer imaginären Verlängerung der Neigung mit einem Untergrund des Fahrzeugs zum Schnittpunkt einer Projektion des Funktionselements senkrecht zu einem Untergrund des Fahrzeugs abhängig von der Lenkstellung. Insbesondere reduziert sich dieser Abstand mit zunehmendem Lenkwinkel α. Während der Fahrt sind einspurige Fahrzeuge mit Gabellenkung in Kurvenfahrten in Abhängigkeit der Fahrgeschwindigkeit nach innen geneigt. Die Verkürzung des beschriebenen Abstands ist bei einem in die Kurve geneigten Fahrzeug mit Gabellenkung zusätzlich verstärkt. Dieser Abstand stellt insbesondere eine Funktionsreichweite des Funktionselements dar. Bei der beschriebenen Verkürzung des Abstands kommt es zu einer Verkürzung der Funktionsreichweite des Funktionselements. Beispielsweise kann das Funktionselement eine Lampe sein. Eine Lampe ist bei Fahrzeugen mit Gabellenkung üblicherweise starr mit dem Lenkrohr verbunden und hat eine vorbestimmte Neigung im Raum, wie beispielsweise um 5° nach unten, um den Gegenverkehr nicht zu blenden. Aufgrund einer nach hinten geneigten Lenkachse ist die Funktionsreichweite in Form der Leuchtweite von der Lenkstellung des Lenkrohrs abhängig und verringert sich mit zunehmendem Lenkwinkel. Bei paralleler Ausrichtung der Lenkachse und einer Drehachse des funktionselement-haltenden Drehelements verstärkt sich die Verkürzung des beschriebenen Abstands bzw. der Funktionsreichweite mit zunehmendem Lenkwinkel. Insbesondere kann eine Drehachse des funktions-elementhaltenden Drehelements gegenüber der Lenkachse nach vorne geneigt sein, vorzugsweise gegenüber der Vertikalen nach vorne geneigt sein, wodurch sich die Verkürzung des beschriebenen Abstands verringert. Beispielsweise kann eine Drehachse des funktionselement-haltenden Drehelements derart nach vorne geneigt sein, dass in einem Lenkwinkelbereich von 1° bis 75° sich die Verkürzung des beschriebenen Abstands bei einem aufrechten Fahrzeug maximal um 75%, vorzugsweise maximal um 60% reduziert. Der Begriff aufrechtes Fahrzeug beschreibt, dass das Fahrzeug bei einer Kurvenfahrt nicht nach innen geneigt ist, z.B. für den Grenzwert einer Fahrgeschwindigkeit von 0 km/h.

Insbesondere kann eine Drehachse des funktionselement-haltenden Drehelements gegenüber der Vertikalen um 15° bis 40° oder um 60° bis 80° nach vorne neigbar, vorzugsweise geneigt sein. Die Verkürzung des beschriebenen Abstands der durch eine Einlenkbewegung des Steuerungselements bewirkte verstärkende Bewegung des Halteelements kann derart ausgeglichen werden, dass die Verkürzung des beschriebenen Abstands geringer ist als bei einem Übersetzungsverhältnis von circa 1, d.h. bei einem Funktionselement, welches ohne erfindungsgerechten Halter angebracht ist.

Insbesondere kann der Halter ganz oder teilweise durch mindestens ein additives Fertigungsverfahren hergestellt sein, beispielsweise auf einer Vorrichtung zur Additiven Fertigung, zum Beispiel durch mindestens ein 3D-Druckverfahren und/oder durch Kunststoff-Lasersintern. Alternativ oder zusätzlich sind jedoch auch andere Materialien und/oder Herstellungsverfahren möglich, beispielsweise metallische Materialien und/oder Komposite.

Der Begriff "Vorrichtung zur additiven Fertigung", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Fertigungsmodul und/oder ein Fertigungssystem beziehen, welches eingerichtet ist, um computergesteuert aus einem oder mehreren flüssigen und/oder festen Materialien dreidimensionale Gegenstände, beispielsweise Werkstücke und/oder Bauteile, durch einen schichtweisen Aufbau zu erzeugen. Die Vorrichtung zur additiven Fertigung kann insbesondere auch als 3D-Drucker bezeichnet werden. Die Vorrichtung zur additiven Fertigung kann eine Schnittstelle umfassen, beispielsweise eine STL-Schnittstelle, insbesondere zur Datenübertragung, beispielsweise um auf einem Datenträger gespeicherten Informationen und/oder Instruktionen einzulesen.

Kontaktpunkte des funktionselement-haltenden Drehelements mit einem Abrollelement und/oder mit einem Übertragungselement und/oder mit dem Steuerungselement können bei einer Projektion in eine Ebene senkrecht zu einer Lenkachse des Lenkrohrs einen lenkwinkelabhängigen Radius beschreiben. Alternativ können Kontaktpunkte des Steuerungselements mit einem Abrollelement und/oder mit einem Drehelement und/oder mit einem Übertragungselement bei einer Projektion in eine Ebene senkrecht zu einer Lenkachse des Lenkrohrs einen lenkwinkelabhängigen Radius beschreiben.

Kontaktpunkte des Drehelements mit dem Abrollelement und/oder mit einem Übertragungselement und/oder dem Steuerungselement können bei einer Projektion in eine Ebene senkrecht zu einer eigenen Drehachse einen lenkwinkelabhängigen Radius beschreiben. Dies ist beispielsweise möglich, falls das Drehelement lenkwinkelabhängige Radien aufweist, falls es beispielsweise ellipsenförmig ausgebildet ist. Alternativ können Kontaktpunkte des Steuerungselements mit einem Abrollelement und/oder mit einem Drehelement und/oder mit einem Übertragungselement bei einer Projektion in eine Ebene senkrecht zu einer eigenen Drehachse einen lenkwinkelabhängigen Radius beschreiben. Dies ist beispielsweise möglich, falls das Steuerungselement lenkwinkelabhängige Radien aufweist, falls es beispielsweise ellipsenförmig ausgebildet ist.

Ein Kontaktpunkt ist diejenigen Stelle eines Bauteils, an der das Bauteil ein anderes Bauteil berührt, wie beispielsweise ein Drehelement ein Abrollelement berührt.

Das Übertragungselement kann derart beweglich sein, dass zumindest in einem Bereich der Lenkwinkel sich ein lenkwinkelabhängiges Übersetzungsverhältnis ergibt.

Insbesondere ist die Drehachse des Drehelements relativ zumindest zu einer Lenkachse des Lenkrohrs neigbar, insbesondere nach vorne geneigt. Die Neigbarkeit der Drehachse ist derart ausgebildet, dass die Neigung der Drehachse zur Einstellung der Funktion des Funktionselements justiert werden kann. Während der Fahrt kann die Neigung der Drehachse des Drehelements relativ zur Lenkachse konstant sein.

In einem weiteren Aspekt der vorliegenden Erfindung wird ein Datenträger mit Instruktionen vorgeschlagen, die, wenn sie auf einer Vorrichtung zur additiven Fertigung, insbesondere auf einem 3D-Drucker, ausgeführt werden, die Vorrichtung zur additiven Fertigung veranlassen, einen Halter der vorliegenden Erfindung, also gemäß einer der oben genannten Ausführungsformen oder gemäß einer der unten noch näher beschriebenen Ausführungsformen, herzustellen. Dementsprechend kann für Definitionen und optionale Ausgestaltungen weitgehend auf die Beschreibung des Halters verwiesen werden. Auch andere Ausgestaltungen sind jedoch grundsätzlich möglich.

Der Begriff "Datenträger", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf mindestens einen nichttransitorischen Datenspeicher beziehen, beispielsweise auf ein Hardware-Datenspeichermedium, auf welchem computerausführbare Instruktionen gespeichert sind. Insbesondere können die Instruktionen auf dem Datenträger als Datenstruktur gespeichert sein, die nach einem Laden in einen Arbeits- und/oder Hauptspeicher einer Vorrichtung zur additiven Fertigung diese veranlassen den erfindungsgemäßen Halter herzustellen. Der Datenträger kann insbesondere auch als "computerlesbarer Datenträger" bezeichnet werden. So kann der Datenträger insbesondere ein von der Vorrichtung zur additiven Fertigung lesbares Speichermedium wie ein Random-Access Memory (RAM) und/oder ein Read-Only Memory (ROM) sein oder umfassen.

Insbesondere können die auf dem Datenträger gespeicherten Instruktionen eine Betriebsanleitung für die Vorrichtung zur additiven Fertigung definieren, beispielsweise zur Steuerung der Vorrichtung verwendet werden. Weiterhin kann der Datenträger, insbesondere in den Instruktionen, eine digitale Darstellung des Halters umfassen. So kann insbesondere ein Datenträger mit Instruktionen vorgeschlagen sein, wobei die Instruktionen sowohl eine digitale Darstellung des hierin beschriebenen Halters definieren als auch eine Betriebsanleitung umfassen, die beispielsweise für die Steuerung der Vorrichtung zur additiven Fertigung angepasst wurde, mit der der Halter unter Verwendung der digitalen Darstellung des Halters hergestellt werden kann, wenn die Instruktionen an die Vorrichtung zur additiven Fertigung weitergeleitet werden.

Beispielsweise können die Instruktionen auf dem Datenträger in Form einer 3D-Datei vorliegen, beispielsweise in einem STL-Format, einem DXF-Format, einem VRML-Format, einem OBJ-Format, einem 3DS-Format, einem OFF-Format, einem AMF-Format, einem 3MF-Format oder ähnlichen von Vorrichtungen zur additiven Fertigung lesbaren Dateiformaten. Alternativ oder zusätzlich können die Instruktionen auf dem Datenträger als Schichtdatei, beispielsweise in einem Schichtdateiformat, vorliegen, zum Beispiel als CLI-Datei, als SLC-Datei oder in einem ähnlichen Dateiformat umfassend Informationen zu einer Vielzahl von Schnittkonturen für die schichtweise Herstellung des Halters in der Vorrichtung zur additiven Fertigung.

In einem weiteren Aspekt der vorliegenden Erfindung wird ein Druckdatensatz vorgeschlagen. Der Druckdatensatz umfasst Informationen, die, wenn sie einer Vorrichtung zur additiven Fertigung zur Verfügung gestellt werden, die Vorrichtung zur additiven Fertigung veranlassen einen Halter der vorliegenden Erfindung, also gemäß einer der oben genannten Ausführungsformen oder gemäß einer der unten noch näher beschriebenen Ausführungsformen, herzustellen. Dementsprechend kann für Definitionen und optionale Ausgestaltungen weitgehend auf die Beschreibung des Halters verwiesen werden. Auch andere Ausgestaltungen sind jedoch grundsätzlich möglich.

Der Begriff "Druckdatensatz", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf Daten beziehen die Informationen zur Herstellung eines dreidimensionalen Gegenstands in der Vorrichtung zur additiven Fertigung, beispielsweise eine Betriebsanleitung, umfassen. Insbesondere kann der Druckdatensatz Anweisungen umfassen, wie ein Druckkopf der Vorrichtung zur additiven Fertigung zu steuern ist und/oder wie viel Material pro Schicht aufzutragen ist. Beispielsweise kann der Druckdatensatz in einem G-Code-Format vorliegen. Beispielsweise kann der Druckdatensatz auf eine bestimmte Vorrichtung zur additiven Fertigung, beispielsweise eines bestimmten Typs und/oder eines bestimmten Herstellers, angepasst sein.

In einem weiteren Aspekt der vorliegenden Erfindung wird ein Computerprogramm vorgeschlagen. Das Computerprogramm umfasst Instruktionen die, wenn das Computerprogramm auf einem Computer ausgeführt wird, den Computer dazu veranlassen einen Druckdatensatz gemäß dem vorhergehenden Anspruch zu erzeugen. Dementsprechend kann für Definitionen und optionale Ausgestaltungen weitgehend auf die Beschreibung des Druckdatensatzes verwiesen werden. Auch andere Ausgestaltungen sind jedoch grundsätzlich möglich.

Insbesondere können die Instruktionen des Computerprogramms, beispielsweise die in dem Computerprogramm vorhandenen oder gespeicherten Instruktionen, eine digitale Darstellung des Halters umfassen, insbesondere des erfindungsgemäßen und hierin beschriebenen Halters, also gemäß einer der oben genannten Ausführungsformen oder gemäß einer der unten noch näher beschriebenen Ausführungsformen. Die digitale Darstellung des Halters kann dabei insbesondere ein 3D Modell des Halters umfassen. Beispielsweise kann das Computerprogramm eingerichtet sein, um aus der digitalen Darstellung des Halters den Druckdatensatz zu erstellen und/oder zu erzeugen.

In einem weiteren Aspekt der vorliegenden Erfindung wird ein Fahrzeugsystem vorgeschlagen. Das Fahrzeugsystem umfasst einen erfindungsgemäßen Halter sowie das zu haltende Funktionselement. Dabei ist das zu haltende Funktionselement ausgewählt aus der Gruppe bestehend aus: einer Lampe, beispielsweise einer elektrisch betriebenen Lampe, beispielsweise einer Taschenlampe oder einer über einen Dynamo betriebenen Lampe, einer Leuchte, einem Fahrradscheinwerfer; einem Sensor, beispielsweise einem Abstandssensor, einem Kamerasensor. Für Definitionen und optionale Ausgestaltungen kann weitgehend auf die Beschreibung des Halters verwiesen werden. Auch andere Ausgestaltungen sind jedoch grundsätzlich möglich.

Der Begriff "Fahrzeugsystem", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine einem einzigen Fahrzeug zugeordnete und aus mindestens zwei Komponenten zusammengesetzte Einheit beziehen, wobei die Komponenten eingerichtet sind, um funktionell zur Erreichung mindestens eines zwecks des Systems zusammen zu wirken. Die Komponenten können dabei miteinander mechanisch verbunden sein, insbesondere reversibel. Das Fahrzeugsystem kann insbesondere dazu dienen das Funktionselement entsprechend einer Lenkstellung eines Fahrzeugs mit Gabellenkung auszurichten, beispielsweise derart, dass das Funktionselement eine verstärkte Einlenkbewegung ausführt.

In einem weiteren Aspekt der vorliegenden Erfindung wird ein Fahrzeug mit Gabellenkung vorgeschlagen, insbesondere ein Fahrzeug, welches eine Gabellenkung aufweist. Das Fahrzeug mit Gabellenkung umfasst einen Rahmen, einen gegenüber dem Rahmen um eine Lenkachse drehbares Lenkrohr sowie einen erfindungsgemäßen Halter und/oder ein erfindungsgemäßes Fahrzeugsystem. Dementsprechend kann für Definitionen und optionale Ausgestaltungen weitgehend auf die Beschreibung des Halters und/oder des Fahrzeugsystems verwiesen werden. Auch andere Ausgestaltungen sind jedoch grundsätzlich möglich.

Das Fahrzeug kann insbesondere ein Zweirad oder Dreirad sein. Beispielsweise kann das Fahrzeug ausgewählt sein aus der Gruppe bestehend aus: einem Fahrrad, einem E-Bike, einem Elektrofahrrad, einem Pedelec, einem Mofa, einem Kleinkraftrad, einem Leichtkraftrad, einem Motorroller, einem Elektromotorroller, einem E-Scooter, einem Motorrad, einem Lastenfahrrad, einem Trike. Auch andere Zwei- oder Dreiräder sind jedoch grundsätzlich möglich.

Die vorgeschlagenen Vorrichtungen weisen gegenüber aus dem Stand der Technik bekannten Vorrichtungen zahlreiche Vorteile auf. Insbesondere lässt sich die Sicherheit, beispielsweise im Straßenverkehr, im Vergleich zum Stand der Technik deutlich verbessern. Zudem ist eine Reduzierung der Komplexität in der Herstellung und der Montage aufgrund einer robusteren Ausführung, bei gleichzeitiger Energie- und Kostenreduktion, möglich.

Durch die vorgeschlagenen Vorrichtungen, insbesondere in dem Fall in dem das Funktionselement eine Lampe umfasst, kann es ermöglicht werden, dass nur der Teil der Straße ausgeleuchtet wird, der für einen Fahrer des Fahrzeugs mit Gabellenkung wie auch für weitere Verkehrsteilnehmer notwendig ist. Insbesondere kann eine Blendung und/oder Lichtverschmutzung verringert oder gar vermieden werden. Im Gegensatz zu herkömmlichen Fahrzeugsystemen, deren Scheinwerfer auf die Gegenfahrbahn leuchten, können die vorgeschlagenen Vorrichtungen, insbesondere Halter und Fahrzeugsystem, es ermöglichen, dass ausschließlich die von dem Fahrzeug mit Gabellenkung zu befahrende Fahrbahn und/oder Straße, zum Beispiel die Fahrbahn in Fahrtrichtung des Fahrzeugs, ausgeleuchtet wird.

Eine weitere Erhöhung der Sicherheit durch die vorgeschlagenen Vorrichtungen kann beispielsweise dadurch ermöglicht werden, dass in einer Kurvenfahrt, also beim Fahren einer Links- oder Rechtskurve, die zum Befahren der Fahrbahn in Fahrtrichtung des Fahrzeugs ausgeleuchtet wird, im Gegensatz zu herkömmlichen Vorrichtungen die bei Kurvenfahrten im Allgemeinen einen Bereich neben der Fahrbahn und/oder Straße ausleuchten. Die vorgeschlagenen Vorrichtungen können daher eine Leuchtkraft sehr effizient entsprechend der Fahrtrichtung des Fahrzeugs ausrichten, wobei insbesondere eine Erhöhung der Sicherheit, bei gleichzeitig geringerem Energieverbrauch möglich ist.

### Kurze Beschreibung der Figuren

Weitere Einzelheiten und Merkmale ergeben sich aus der nachfolgenden Beschreibung von Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt, sondern wird nur durch die anhängenden Ansprüche definiert. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigen:
- Figuren 1 und 2: einen Ausschnitt aus einem Ausführungsbeispiel eines Fahrzeugs mit Gabellenkung mit unterschiedlichen Lenkstellungen, ein Ausführungsbeispiel eines Fahrzeugsystems und ein Ausführungsbeispiel eines Halters in Draufsicht; und
- Figuren 3 bis 16: unterschiedliche Ausführungsbeispiele eines Halters, eines Fahrzeugsystems sowie eines Fahrzeugs mit Gabellenkung in perspektivischen Ansichten;
- Figur 17: zeigt eine perspektivische Unteransicht des Steuerungselements, des Drehelements und der Projektion von Kontaktpunkten des Drehelements in die Ebene senkrecht zu der Lenkachse; und
- Figur 18: beispielhafte Verläufe der Leuchtweite, wenn das Funktionselement als Scheinwerfer bzw. Lampe ausgeführt ist, in Abhängigkeit vom Leuchtwinkel bei verschiedenen Neigungen der Drehachse des funktionselement-haltenden Drehelements gegenüber der Vertikalen.

### Beschreibung der Ausführungsbeispiele

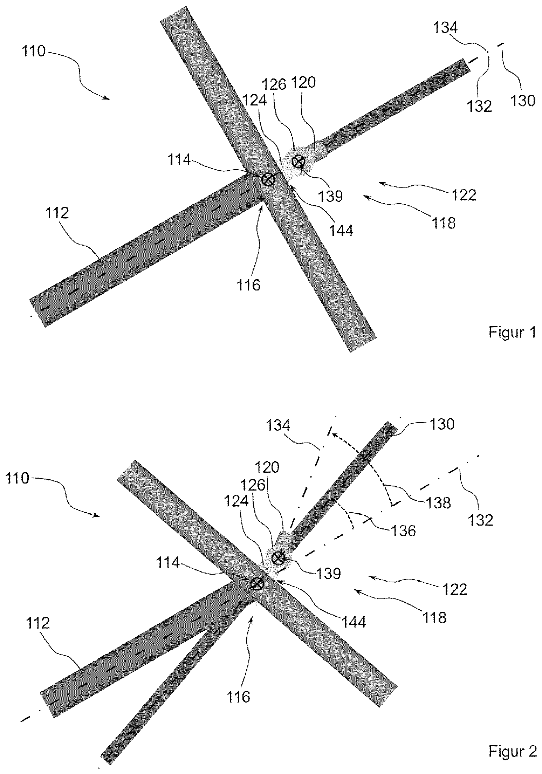

Figuren 1 und 2 zeigen einen Ausschnitt aus einem Ausführungsbeispiel eines Fahrzeugs 110 mit Gabellenkung in einer Draufsicht. Das Fahrzeug 110 mit Gabellenkung umfasst einen Rahmen 112, einen gegenüber dem Rahmen 112 um eine Lenkachse 114 drehbares Lenkrohr 116. Das Fahrzeug 110 mit Gabellenkung umfasst weiterhin einen Halter 118 zur Anpassung einer Ausrichtung 134 eines zu haltenden Funktionselements 120 an eine Lenkstellung des Fahrzeugs 110 mit Gabellenkung. Alternativ oder zusätzlich umfasst das Fahrzeug 110 mit Gabellenkung ein Fahrzeugsystem 122 umfassend den Halter 118 sowie das Funktionselement 120.

Der Halter 118 umfasst ein Steuerungselement 124, wobei das Steuerungselement 124 zumindest teilweise das Lenkrohr 116 der Gabellenkung des Fahrzeugs 110 umfasst oder mit dem Lenkrohr 116 starr verbindbar ist. Weiterhin umfasst der Halter 118 mindestens ein gegenüber dem Steuerungselement 124 drehbar angeordnetes Drehelement 126 sowie mindestens ein mit dem Drehelement 126 verbundenes Halteelement 128, an dem das zu haltende Funktionselement 120 befestigbar ist. Das Drehelement 126 und das Steuerungselement 124 sind derart angeordnet, dass eine durch eine Einlenkbewegung des Steuerungselements 124 bewirkte Drehbewegung des Drehelements 126 eine die Einlenkbewegung verstärkende Bewegung des Halteelements 128 bewirkt.

Figur 1 zeigt einen Ausschnitt der Fahrzeugs 110 mit Gabellenkung in einer geradeaus gerichteten Lenkstellung. In der geradeaus gerichteten Lenkstellung kann eine Fahrtrichtungsachse 130 einer Rahmen-Ausrichtungsachse 132 entsprechen und/oder parallel zu der Rahmen-Ausrichtungsachse 132 angeordnet sein. Weiterhin kann in der geradeaus gerichteten Lenkstellung auch die Ausrichtung 134 des Funktionselements 120 parallel zu der Fahrtrichtungsachse 130 und/oder der Rahmen-Ausrichtungsachse 132 ausgerichtet sein.

Figur 2 zeigt dasselbe Ausführungsbeispiel wie in Figur 1 mit einer nach links eingelenkten Lenkstellung, insbesondere nach Durchführen einer Einlenkbewegung entgegen dem Uhrzeigersinn. Die Einlenkbewegung, welche zu der dargestellten nach links eingelenkten Lenkstellung führt, kann beispielsweise eine Rotation des Lenkrohrs 116 gegenüber dem Rahmen 112 um einen Winkel α 136 umfassen, wobei α > 0°. Dieselbe Einlenkbewegung des Lenkrohrs, führt durch die Anordnung des Drehelements 126 und das Steuerungselement 124 zu einer die ein Lenkbewegung verstärkenden Bewegung des Halteelements 128, sodass das an dem Halteelement 132 befestigbare Funktionselement 120 seine Ausrichtung 134 um einen Winkel β 138 entgegen dem Uhrzeigersinn rotieren kann, wobei β > α.

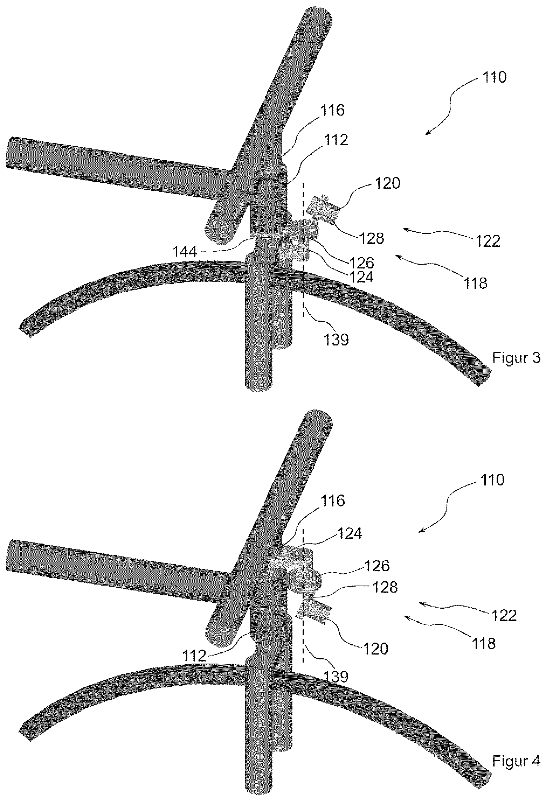

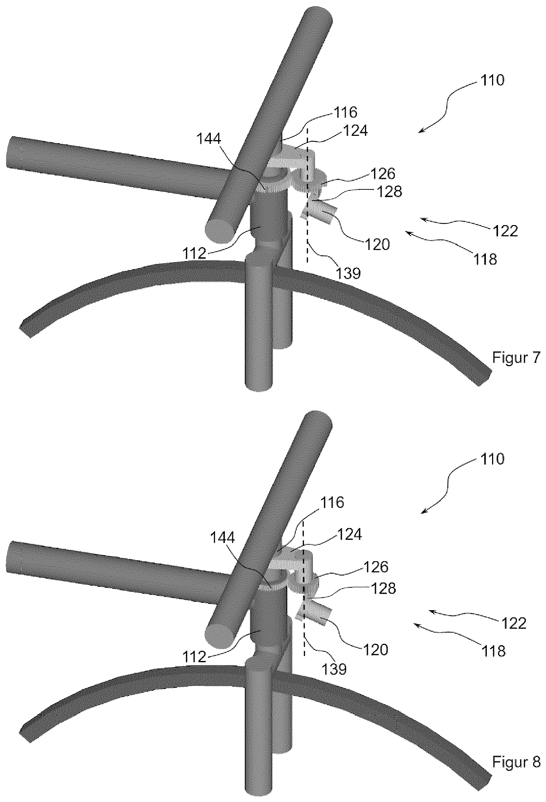

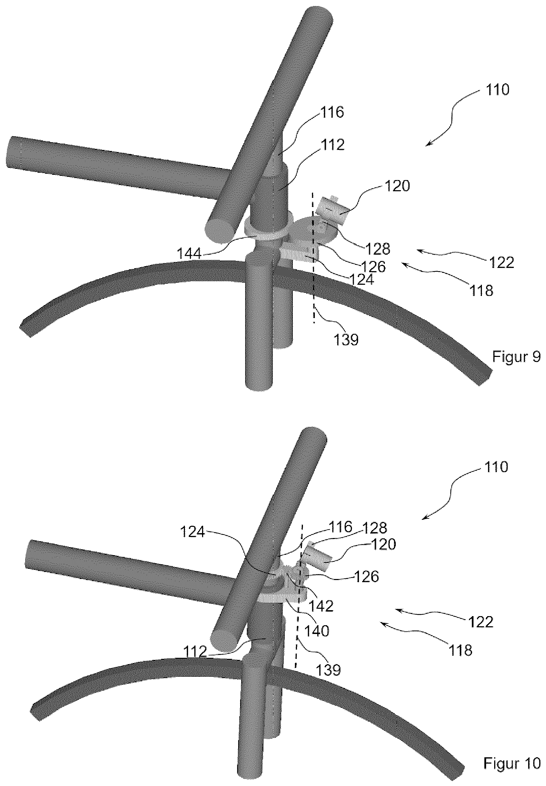

In den Figuren 3-10 sind unterschiedliche Ausführungsbeispiele eines Halters 118, eines Fahrzeugsystems 122 sowie eines Fahrzeugs 110 mit Gabellenkung in perspektivischen Ansichten dargestellt. Dabei kann insbesondere das Drehelement 126 derart angeordnet sein, dass es die Drehbewegung um den Rahmen 112 des Fahrzeugs 110 ausführt, wie beispielsweise in den Figuren 3-9 gezeigt. Beispielsweise kann das Steuerungselement 124 zumindest teilweise fingerförmig ausgebildet sein. Dabei kann insbesondere das Drehelement 126 konzentrisch um den fingerförmig ausgebildeten Teil des Steuerungselements 124 angeordnet sein, sodass eine Bewegung des Steuerungselements 124 eine Bewegung der Drehachse 139 des Drehelements 126 bewirkt. Das Drehelement 126 kann beispielsweise auch derart angeordnet sein, dass es die Drehbewegung um mindestens ein starr mit dem Rahmen 112 verbindbares Trägerelement 140 ausführt, wie beispielsweise in Figur 10 gezeigt.

Der Halter 118 kann weiterhin mindestens ein Übertragungselement 142 zur Übertragung der Bewegung des Steuerungselements 124 auf das Drehelement 126 umfassen. Das Übertragungselement 142 kann dabei insbesondere ein Zahnrad sein. Eine derartige Ausgestaltung ist beispielhaft in Figur 10 gezeigt.

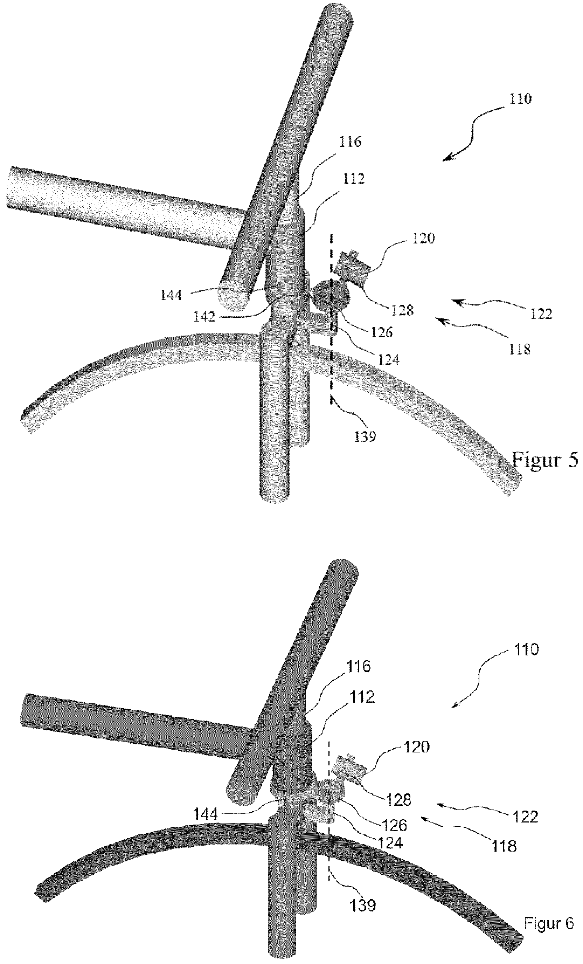

Alternativ oder zusätzlich kann die Drehbewegung des Drehelements 126 auch eine Abrollbewegung gegenüber dem Rahmen 112 oder gegenüber einem mit dem Rahmen 112 verbindbaren Abrollelement 144 sein. Beispielsweise kann das Abrollelement 144 als komplementäres Gegenstück zu dem Drehelement 126 ausgebildet sein. So können zum Beispiel das Abrollelement 144 und das Drehelement 126 eine Wälzpaarung bilden. Beispielsweise kann das Drehelement 126 zumindest teilweise als Zahnrad und das Abrollelement 144 zumindest teilweise als Zahnkranz ausgebildet sein. Beispielhafte Darstellungen von derartig verzahnten Paarungen des Drehelements 126 und des Abrollelements 144 sind in den Figuren 3,6, 7 und 8 gezeigt. Alternativ oder zusätzlich kann das Drehelement 126 des teilweise als Reibrad und das Abrollelement 144 zumindest teilweise als Reibkranz ausgebildet sein. Eine beispielhafte Darstellung einer derartigen Reibpaarung des Drehelements 126 und des Abrollelements 144 ist in Figur 9 gezeigt. Weiterhin alternativ oder zusätzlich kann das Abrollelement 144 auch als Gummizug ausgebildet sein, wie beispielhaft in Figur 5 gezeigt. Ist das Abrollelement 144 nicht starr mit dem Rahmen 112 verbunden, kann in diesem Fall das Abrollelement 144 als Übertragungselement 142 wirken. In dem Fall ist der Rahmen selbst das Abrollelement 144, auf welchem das Übertragungselement 142 abrollt. Auch eine Ausgestaltung ohne Abrollelement 144 ist möglich. Dabei kann beispielsweise ein als Reibrad ausgestattetes Drehelement 126 direkt über eine Oberfläche des Rahmens 112 abrollen, wie beispielhaft in Figur 4 dargestellt.

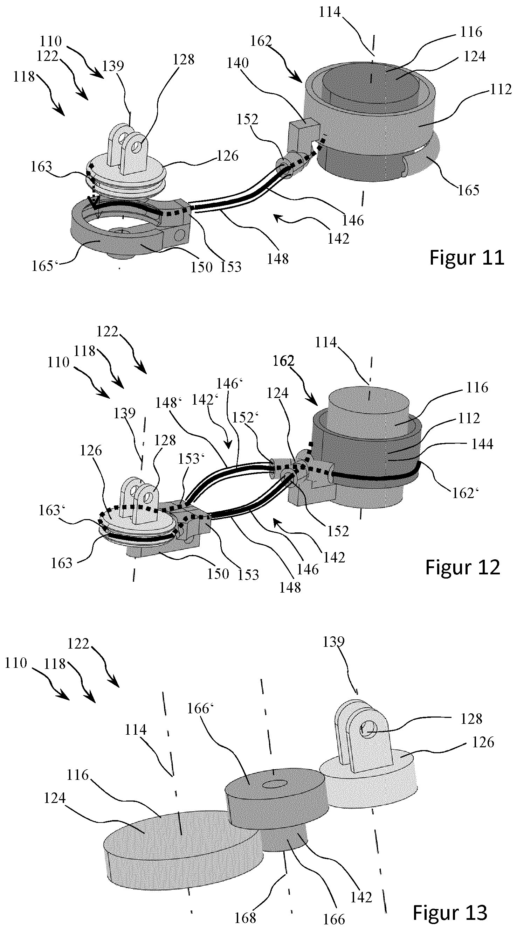

Figur 11 zeigt ein weiteres Ausführungsbeispiel eines Halters 118, eines Fahrzeugsystems 122 sowie eines Fahrzeugs 110 mit Gabellenkung mit oder ohne Federgabel in einer perspektivischen Ansicht dargestellt. Es werden insbesondere die Unterschiede zu den vorherigen Ausführungsbeispielen beschrieben und gleiche oder vergleichbare Bauteile sind mit gleichen Bezugszeichen versehen. Bei dem in Figur 11 gezeigten Ausführungsbeispiel ist das Lenkrohr 116 als Steuerungselement 124 und ein Übertragungselement 142als ein Bowdenzug, umfassend eine Bowdenzugseele 146 und eine Bowdenzughülle 148, ausgebildet. Die Bowdenzugseele 146 ist mit dem Lenkrohr 116 und dem das Halteelement 128 umfassende Drehelement 126 an den Befestigungspunkten 162 bzw. 163 starrverbunden. In der Bowdenzughülle 148 ist die Bowdenzugseele 146 beweglich geführt. Ein Trägerelement 140 ist starr mit dem Rahmen 112 verbunden und umfasst weiterhin eine erste Aufnahme 152 für die Bowdenzughülle 148 und eine erste Führung 165 für die auf Schub und Zug ausgelegte Bowdenzugseele 146. Das Drehelement 126 ist drehbar an bzw. auf einem Drehelementhalter 150 angeordnet, der starr mit dem Fahrzeug mit Gabellenkung verbunden ist. Der Drehelementhalter 150 umfasst weiterhin eine zweite Aufnahme 153 für die Bowdenzughülle 148 und eine zweite Führung 165' für die Bowdenzugseele. Die Bowdenzugseele 146 befindet sich nur auf einer Seite bezüglich der Drehachse 139 bzw. der Lenkachse 114. Insbesondere kann eine Drehstellung des Drehelements 126, in einem vorgegebenen Übersetzungsverhältnis, der Lenkstellung des Lenkrohrs 116 um die Lenkachse 114 gegenüber dem Rahmen 112 des Fahrzeugs 110 entsprechen. Mit diesem Aufbau kann insbesondere ein Verdrehen des Lenkrohrs 116 um die Lenkachse 114 gegenüber dem Rahmen 112, beispielsweise dem Steuerrohr des Fahrzeugs 110, ein Verdrehen des Drehelements 126 entsprechend einem vorgegebenen Übersetzungsverhältnis bewirken.

Figur 12 zeigt ein weiteres Ausführungsbeispiel eines Halters 118, eines Fahrzeugsystems 122 sowie eines Fahrzeugs 110 mit Gabellenkung in einer perspektivischen Ansicht dargestellt. Es werden insbesondere die Unterschiede zu dem vorherigen Ausführungsbeispiel beschrieben und gleiche oder vergleichbare Bauteile sind mit gleichen Bezugszeichen versehen. Bei dem in Figur 12 gezeigten Ausführungsbeispiel umfasst das mit dem Lenkrohr 116 direkt oder mittelbar verbundene Steuerungselement 124 die erste Aufnahmen 152, 152' für zwei Bowdenzughüllen 148 und 148'. Das Ausführungsbeispiel umfasst den Rahmen 112, beispielsweise ein Steuerrohr, als Abrollelement 144. Das Abrollelement 144 ist mit den beiden Bowdenzugseelen 146, 146' an den Befestigungspunkten 162, 162' verbunden, die jeweils aus Zug ausgelegt sind. Die Übertragungselemente 142 und 142' sind als zwei Bowdenzüge ausgeführt, umfassend die beiden Bowdenzugseelen 146 und 146', die jeweils in den Bowdenzughüllen 148, 148' beweglich geführt sind und mit dem das Halteelement 128 umfassenden Drehelement 126 an den Befestigungspunkten 163, 163' verbunden sind. Das Drehelement 126 ist drehbar an bzw. auf einem Drehelementhalter 150 angeordnet und enthält die zweiten Aufnahmen 153, 153' für die beiden Bowdenzughüllen 148, 148'. Alternativ kann es sich auch um eine umlaufende Bowdenzugseele 146 handeln, die in beiden Bowdenzughüllen 148, 148' verschiebbar ist. Der Drehelementhalter 150 ist starr mit dem Fahrzeug mit Gabellenkung verbunden. Die Bowdenzugseelen 146, 146' befinden sich auf gegenüberliegenden Seiten bezüglich der Drehachse 139 bzw. der Lenkachse 114, d.h. die Bowdenzüge sind beidseitig der Drehachse 139 bzw. der Lenkachse 114 angeordnet, d.h. die Belastung der Bowdenzüge ist immer auf Zug ausgelegt. Der Vorteil der beidseitigen Variante für die Anordnung des Bowdenzugs ist, dass es sich quasi um ein geschlossenes Seilzugsystem handelt. Daher liegt zum einen die Bowdenzugseele immer am rotationsbeweglichen Element an und muss nicht geführt werden, zum anderen müssen die Bowdenzughüllen 148, 148' noch nicht einmal starr mit den Aufnahmen der Bowdenzughüllen verbunden werden. Alternativ zu den gezeigten Figuren können die Bowdenzugseelen den Rahmen auch mehr als einmal umschlingen, um die Gefahr eines Durchrutschens zu verringern, insbesondere wenn die Bowdenzüge an den Rahmen oder die Lenkung geklemmt und nicht verschraubt sind.

Das in Figur 11 gezeigte Ausführungsbeispiel kann auch mit zwei auf Zug ausgelegten Bowdenzügen realisiert werden, die parallel verlaufen. Das in Figur 12 gezeigte Ausführungsbeispiel kann auch mit einem über Kreuz verlegten Bowdenzug realisiert werden, der auf Zug und Schub ausgelegt ist.

Die Realisierung kann jeweils an einem Fahrzeug mit oder ohne Federgabel erfolgen. Insbesondere bei der in Figur 12 gezeigten Ausführungsform mit über Kreuz verlegten zwei Bowdenzügen ändert sich bei einem Fahrzeug ohne Federgabel der Abstand vom ersten zum zweiten Halter nicht, so dass alternativ auf die Bowdenzughüllen verzichtet werden kann.

In den Ausführungsformen der Figuren 11 und 12 ist der Drehelementhalter 150 mit dem Lenkrohr 116 verbunden. Alternativ dazu kann der Drehelementhalter 150 auch mit dem Rahmen des Fahrzeugs verbunden sein. Dann bewegt sich der Drehelementhalter nicht mit dem Lenksystem selbst, so dass der Durchmesser des Drehelements verglichen mit den Darstellungen in den Figuren 11 und 12 verkleinert werden kann, um die entsprechenden Übersetzungsverhältnisse zu erhalten.

Figur 13 zeigt ein weiteres Ausführungsbeispiel eines Halters 118, eines Fahrzeugsystems 122 sowie eines Fahrzeugs 110 mit Gabellenkung in einer perspektivischen Ansicht dargestellt. Es werden insbesondere die Unterschiede zu den vorherigen Ausführungsbeispielen beschrieben und gleiche oder vergleichbare Bauteile sind mit gleichen Bezugszeichen versehen. Bei dem in Figur 13 gezeigten Ausführungsbeispiel ist der Halter 118 zur Änderung des Übersetzungsverhältnisses ausgebildet. Das in Figur 13 gezeigte Ausführungsbeispiel stellt insbesondere eine Modifikation des in Figur 10 gezeigten Ausführungsbeispiels dar und kann in ähnlicher Weise auch in anderen Ausführungsbeispielen vorgesehen werden. Der Halter 118 des in Figur 13 gezeigten Ausführungsbeispiels weist mindestens ein Übertragungselement 142 zur Übertragung der Bewegung des Steuerungselements 124 auf das mit dem Halteelement 128 verbundene Drehelement 126 auf. Das Übertragungselement 142 ist insbesondere ein Zahnrad oder ein Reibrad. Das Übertragungselement 142 kann zur Anpassung des Übersetzungsverhältnisses verwendet werden, da das Übertragungselement 142 zwei unterschiedlich große Durchmesser verwendet. Dadurch ist eine kompaktere Bauweise möglich. So umfasst das Übertragungselement 142 ein erstes Zahnrad bzw. Reibrad 166 mit einem ersten Durchmesser und ein zweites Zahnrad bzw. Reibrad 166' mit einem zweiten Durchmesser. Das erste Zahnrad bzw. Reibrad 166 und das zweite Zahnrad bzw. Reibrad 166' sind an ihren zugewandten axialen Stirnflächen miteinander verbunden oder einstückig bzw. integral ausgebildet. In jedem Fall sind das erste und zweite Zahnrad bzw. Reibrad 166, 166' auf einer gemeinsamen Drehachse 168 angeordnet. Der erste Durchmesser unterscheidet sich von dem zweiten Durchmesser. Bei dem gezeigten Ausführungsbeispiel ist der erste Durchmesser kleiner als der zweite Durchmesser. Das erste Zahnrad bzw. Reibrad 166 greift in das Steuerungselement 124 und das zweite Zahnrad bzw. Reibrad 166' greift in das Drehelement 126. Optional können die Drehachsen gegeneinander geneigt werden, indem die Zahn- bzw. Reibräder als Kegelzahnräder bzw. Kegelreibräder ausgeführt werden.

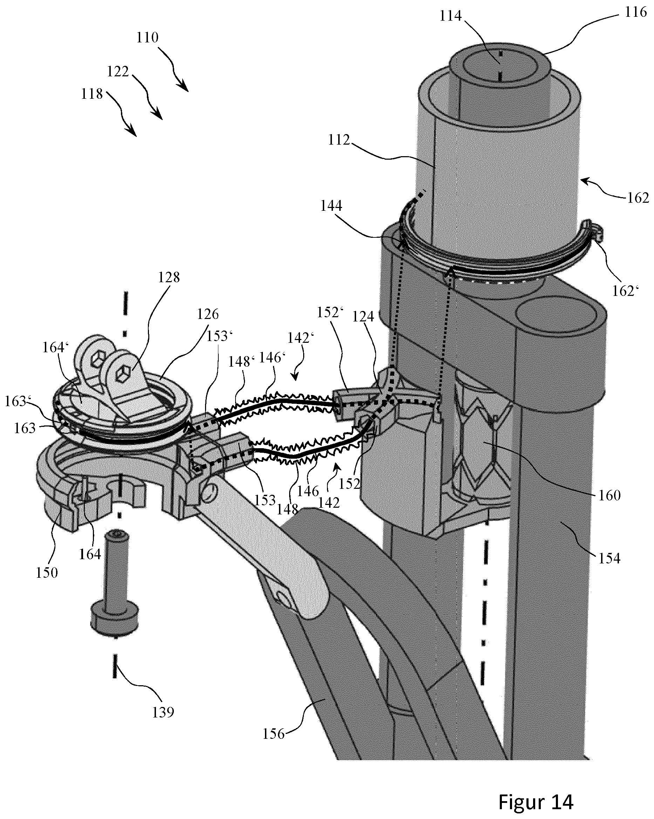

Figur 14 zeigt ein weiteres Ausführungsbeispiel eines Halters 118, eines Fahrzeugsystems 122 sowie eines Fahrzeugs 110 mit Gabellenkung in einer perspektivischen Ansicht dargestellt. Es werden insbesondere die Unterschiede zu dem vorherigen Ausführungsbeispiel beschrieben und gleiche oder vergleichbare Bauteile sind mit gleichen Bezugszeichen versehen. Zur besseren Veranschaulichung der verschiedenen Teile sind das Steuerungselement 124 sowie das Drehelement 126 in Richtung der Vertikalen verschoben dargestellt. Bei dem in Figur 14 gezeigten Ausführungsbeispiel weist der Rahmen 112 eine Federgabel 154 mit einer Schwinge 156 auf. Die Übertragungselemente 142 und 142' sind als Bowdenzüge ausgebildet, enthaltend zwei Bowdenzugseelen 146, 146' sowie zwei Bowdenzughüllen 148, 148'. Das Steuerungselement 124 umfasst eine Klemme 160, die von unten in das Lenkrohr 116 eingeführt und mit diesem von innen verbunden ist, und zwei erste Aufnahmen 152, 152' für die Bowdenzughüllen 148 und 148'. Das mit dem Halteelement 128 verbundene Drehelement 126 ist drehbar an bzw. auf einem Drehelementhalter 150 angeordnet, welcher die zweiten Aufnahmen 153, 153' für die beiden Bowdenzughüllen 148, 148' enthält. Der Drehelementhalter 150 ist mittelbar über einen handelsüblichen Halter für einen Fahrradscheinwerfer starr mit der Schwinge 156 verbunden. Die beiden Bodenzugseelen 146, 146' sind über Kreuz geführt und an jeweils einem oder mehreren ersten Befestigungspunkten 162, 162' mit dem Abrollelement 144 verbunden, welches als Rahmen 112 bzw. Steuerrohr bzw. als mit dem Steuerrohr verbundener Klammer ausgeführt ist. Die zweiten Enden der Bowdenzüge 146, 146' sind jeweils mit einem oder mehreren zweiten Befestigungspunkten 163, 163' am Drehelement 126 verbunden. Der Drehelementhalter 150 weist mindestens einen ersten Anschlag 164 auf, z.B. in Form eines Stiftes. Das Drehelement weist mindestens einen zweiten Anschlag 164' auf. Die Anschläge 164, 164' sind derart eingerichtet, eine Bewegung des Drehelements 126 bis zu einer bestimmten Rotation des Drehelements zu begrenzen, vorzugsweise <80°. Bei einem Übersetzungsverhältnis von etwa i=2 wird die Begrenzung bei einem Lenkwinkel von etwa α=40° erreicht. Die Bowdenzughüllen sind derart gestaltet, dass sie eine Rückstellkraft aufweisen, beispielsweise indem sie als unter Spannung stehende Druckfedern, z.B. einer Spiralfeder, in der die Bowdenzugseelen 146, 146' verlaufen, ausgebildet sind und bei größeren Lenkwinkeln eine axiale Längenänderung erfahren. Durch diese Längenänderung ergibt sich ein von der Lenkstellung abhängiges Übersetzungsverhältnis, welches bei größeren Lenkwinkeln kleiner ist als bei kleineren Lenkwinkeln. Die Druckfeder ist dabei so auszulegen, dass sie eine ausreichende Rückstellkraft bewirkt, so dass die Längenänderung der Bowdenzughülle bei Berührung der beiden Anschläge 164 und 164' eintritt.

Beispielsweise können die Bowdenzugseelen an den mit 163, 163' bezeichneten Positionen am Drehelement umgeleitet und auf der gegenüberliegenden Seite am Drehelementhalter befestigt werden. Auf diese Weise kann das Übersetzungsverhältnis verändert und eine kompaktere Bauweise von Drehelementhalter und Drehelement erreicht werden.

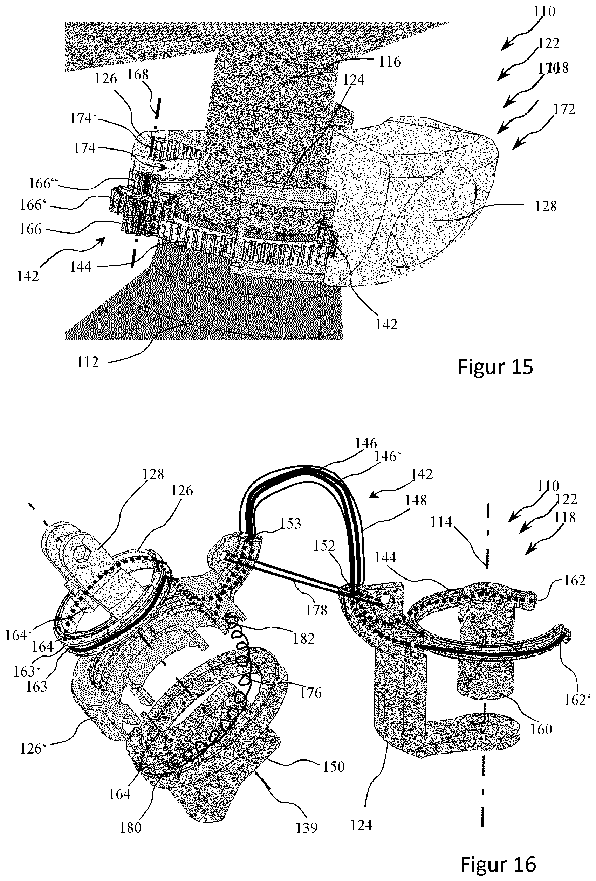

Figur 15 zeigt ein weiteres Ausführungsbeispiel eines Halters 118, eines Fahrzeugsystems 122 sowie eines Fahrzeugs 110 mit Gabellenkung in einer perspektivischen Ansicht dargestellt. Es werden insbesondere die Unterschiede zu den vorherigen Ausführungsbeispielen beschrieben und gleiche oder vergleichbare Bauteile sind mit gleichen Bezugszeichen versehen. Bei dem in Figur 15 gezeigten Ausführungsbeispiel ist der Halter 118 als Umlaufgetriebe 170, wie beispielsweise als Planetengetriebe 172 ausgebildet. Das Steuerungselement 124 ist als ein mit dem Lenkrohr 116 verbundener Planetenradträger ausgebildet. Das Steuerungselement 124 weist ein Abrollelement 144 auf, welches als Sonnenrad ausgebildet ist. Das Abrollelement 144 ist beispielsweise auf dem Rahmen 112 in Form eines Zahnkranzes angeordnet. Weiterhin sind mehrere Übertragungselemente 142 als Planetenräder ausgebildet. Das mit dem Halteelement 128 verbundene Drehelement 126 ist als Hohlrad mit mindestens einer Innenverzahnung ausgebildet.

Der Halter 118 des in Figur 15 gezeigten Ausführungsbeispiels kann ebenfalls zum Ändern des Übersetzungsverhältnisses ausgebildet sein. So umfasst das Übertragungselement 142 ein erstes Zahnrad 166 mit einem ersten Durchmesser, ein zweites Zahnrad 166' mit einem zweiten Durchmesser und ein drittes Zahnrad 166" mit einem dritten Durchmesser. Das erste Zahnrad 166, das zweite Zahnrad 166 und das dritte Zahnrad 166" sind an ihren zugewandten axialen Stirnflächen miteinander verbunden oder einstückig bzw. integral ausgebildet. In jedem Fall sind das erste Zahnrad 166, das zweite Zahnrad 166' und das dritte Zahnrad 166" auf einer gemeinsamen Drehachse 168 angeordnet. Die drei Zahnräder 166, 166', 166" haben unterschiedliche Größen, wobei das zweite Zahnrad 166' größer als das dritte Zahnrad 166". Vorzugsweise ist das erste Zahnrad kleiner als das zweite und größer als das dritte Zahnrad. Das erste Zahnrad 166 greift in das Abrollelement 144. Das Drehelement 126 weist eine erste Innenverzahnung 174 auf. Das Drehelement 126 weist weiterhin eine zweite Innenverzahnung 174' auf. Die zweite Innenverzahnung 174' ist relativ zu der ersten Innenverzahnung 174 in axialer Richtung bezüglich der Lenkachse 114 und in Umfangsrichtung um die Lenkachse 114 versetzt angeordnet. In Abhängigkeit vom Lenkwinkel greift das zweite Zahnrad 166' in die erste Innenverzahnung 174 des Drehelements 126 oder das dritte Zahnrad 166" greift in die zweite Innenverzahnung 174' des Drehelements 126. Entsprechend greifen am Planetenrad je nach Lenkstellung verschiedene Zahnräder. Dadurch ändert sich das Übersetzungsverhältnis in Abhängigkeit von der Lenkstellung. Zum Beispiel greift die Verzahnung von 166' und 174 bei kleinen Lenkwinkeln und die Verzahnung von 166" und 174' bei großen Lenkwinkeln, so dass das Übersetzungsverhältnis bei kleinen Lenkwinkeln größer ist als bei großen Lenkwinkeln.

Alternativ kann das Umlaufgetriebe auch derart ausgebildet sein, dass das Abrollelement als Hohlrad, das Drehelement als Sonnenrad und der Planetenradträger als Steuerungselement ausgebildet ist und mehrere Übertragungselemente als Planetenräder ausgebildet sind. Alternativ kann das Umlaufgetriebe auch derart ausgebildet sein, dass das Steuerungselement als Sonnenrad und das Drehelement als Hohlrad ausgebildet ist. Auch weitere alternative Ausführungsformen eines Umlaufgetriebes sind realisierbar.

Figur 16 zeigt ein weiteres Ausführungsbeispiel eines Halters 118, eines Fahrzeugsystems 122 sowie eines Fahrzeugs 110 mit Gabellenkung in einer perspektivischen Ansicht dargestellt. Es werden insbesondere die Unterschiede zu den vorherigen Ausführungsbeispielen beschrieben und gleiche oder vergleichbare Bauteile sind mit gleichen Bezugszeichen versehen. Bei dem in Figur 16 gezeigten Ausführungsbeispiel ist ein erstes, mit dem Halteelement 128 verbundenes, Drehelement 126 und ein zweites Drehelement 126' vorgesehen, die relativ zueinander drehbar sind. Weiterhin ist mehr als ein Übertragungselement 142 vorgesehen. Genauer sind zwei Übertragungselemente 142 vorgesehen. Die Übertragungselemente 142 sind als Bowdenzüge ausgebildet, umfassend eine erste und zweite Bowdenzugseele 146, 146'. Die Bowdenzugseelen 146, 146' sind jeweils mit dem Abrollelement 144 verbunden, welches als Rahmen 112 bzw. Steuerrohr bzw. als mit dem Steuerrohr verbundenen Klammer ausgeführt ist. Weiterhin umfassen die Bowdenzüge eine Bowdenzughülle 148, in der jeweils beide Bowdenzugseelen 146, 146' beweglich geführt sind. Es versteht sich, dass für jede Bowdenzugseele 146, 146' eine separate Bowdenzughülle 148 vorgesehen sein kann. Das zweite Drehelement 126' ist drehbar an bzw. auf einem Drehelementhalter 150 angeordnet, der mit dem Fahrzeug mit Gabellenkung starr verbunden ist. Die Bowdenzughülle 148 ist mit dem zweiten Drehelement 126' über die zweite Aufnahme 153 und mit dem Steuerungselement 124 über die erste Aufnahme 152 verbunden, welches mit dem Lenkrohr 116 verbunden ist, wie beispielsweise mittels einer Klemme 160 innen im Lenkrohr 116 befestigt. Die Bowdenzugseelen 146, 146' sind auf gegenüberliegenden Seiten bezüglich der Drehachse 139 bzw. der Lenkachse 114 befestigt, d.h. die Bowdenzüge 146, 146' sind beidseitig der Drehachse 139 bzw. der Lenkachse 114 befestigt, laufen über Kreuz und sind an den Befestigungspunkten 162, 162' mit dem Abrollelement sowie an den Befestigungspunkten 163, 163' mit dem Drehelement verbunden. Die Bowdenzughülle 148 ist nicht axial dehnbar. Der Drehelementhalter 150 weist mindestens einen ersten Anschlag 164 auf, z.B. in Form eines Stiftes. Das erste Drehelement 126 weist mindestens einen zweiten Anschlag 164' auf. In dieser Ausführungsform sind beispielsweise zwei Anschläge 164' derart eingerichtet, eine Bewegung des ersten Drehelements 126 bis zu einer bestimmten Rotation des Drehelements 126 im und entgegen dem Uhrzeigersinn zu begrenzen, vorzugsweise <80°. Bei einem Übersetzungsverhältnis von etwa i=2 wird die Begrenzung bei einem Lenkwinkel von etwa α=40° erreicht. Das zweite Drehelement 126' ist derart gestaltet, dass über die Rückstellkraft beidseitig vorgesehene Federn 176, beispielsweise Spiralfedern, Torsionsfedern oder Drehfedern, und/oder eines Expanderseils 178 in Position gehalten wird. Die Federn 176 sind beispielweise zwischen einem Vorsprung 180 an dem Drehelementhalter 150, der sich abschnittsweise in Umfangsrichtung um die Drehachse 139 erstreckt und einer Aufnahme 182 an dem zweiten Drehelement 126' angeordnet. Das Expanderseil 178 kann zwischen dem Steuerungselement 124 und dem zweiten Drehelement 126' angeordnet und insbesondere vorgespannt sein. Eine Auslenkung des zweiten Drehelements 126' erfolgt dann, wenn ein Lenkwinkel erreicht wird, bei dem erster und zweiter Anschlag sich berühren. Eine weitere Auslenkung des ersten Drehelements 126 erfolgt bei größeren Lenkwinkeln nicht. Stattdessen bewegt sich das zweite Drehelement 126' unter Erhöhung der Rückstellkräfte, so dass sich ein von der Lenkstellung abhängiges Übersetzungsverhältnis ergibt, welches insbesondere bei größeren Lenkwinkeln kleiner ist als bei kleineren Lenkwinkeln.

Optional kann, wie nachstehend ausführlicher beschrieben ist, die Drehachse 139 relativ zu der Lenkachse 114 geneigt sein. Insbesonder ist die Drehachse 139 relativ zu der Lenkachse 114 nach vorne, d.h. in Fahrtrichtung, vorzugsweise geneigt. Die Drehachse 139 kann insbesondere gegenüber der Vertikalen nach vorne geneigt sein, vorzugsweise in einem Winkel von 15° bis 40° gegenüber der Vertikalen.

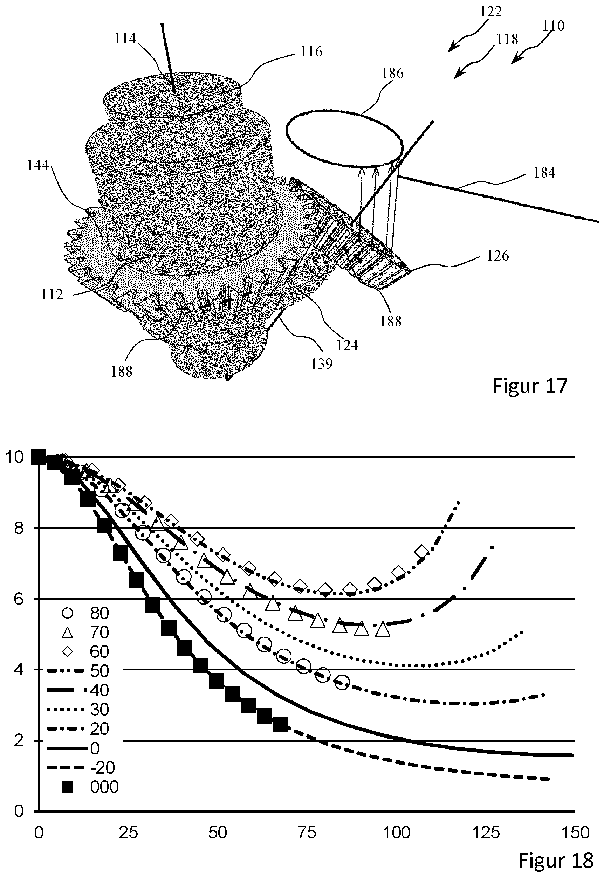

Figur 17 zeigt ein weiteres Ausführungsbeispiel eines Halters 118, eines Fahrzeugsystems 122 sowie eines Fahrzeugs 110 mit Gabellenkung in einer perspektivischen Ansicht dargestellt. Das Funktionselement ist in diesem Ausführungsbeispiel als Lampe oder Fahrradscheinwerfer ausgebildet. Es werden insbesondere die Unterschiede zu den vorherigen Ausführungsbeispielen beschrieben und gleiche oder vergleichbare Bauteile sind mit gleichen Bezugszeichen versehen. Bei dem in Figur 17 gezeigten Ausführungsbeispiel ist eine Drehachse 139 relativ zu der Lenkachse 114 oder einer Vertikalen, d.h. einer Richtung senkrecht zu einer Horizontalen definiert durch den Untergrund, auf dem das Fahrzeug steht oder sich bewegt, geneigt.

Dargestellt ist insbesondere das Steuerungselement 124. Die Lenkachse 114 ist relativ zu einer Vertikalen nach hinten geneigt. Die Drehachse 139 ist relativ zu der Lenkachse 114 und der Vertikalen nach vorne geneigt. Beispielhaft dargestellt ist auch ein von dem Funktionselement in Form einer Lampe ausgesendeter Lichtstrahl 184. Der Lichtstrahl 184 ist gegenüber einer Horizontalen nach unten geneigt, wie beispielsweise um 5°. Weiterhin angedeutet ist auch eine Projektion 186 des Drehelements 126, welches in diesem Ausführungsbeispiel als kreisrundes Kegelzahnrad ausgebildet ist, in eine Ebene senkrecht zu der Lenkachse 114. Wie zu erkennen ist, bildet die Projektion 186 des Drehelements 126 in eine Ebene senkrecht zu der Lenkachse 114 eine Ellipse. Dadurch weist der Abstand der Kontaktpunkte eines als Kegelzahnrad ausgebildeten Abrollelements 144 in dieser Projektion 186 lenkwinkelabhängige Radien auf. Die Kontaktpunkte 188 des Drehelements 126 und die Kontaktpunkte 188' des Abrollelements sind anhand der mittleren Durchmesser der Kegelzahnräder beschreibbar. Insbesondere vorteilhaft sind Ausführungsbeispiele, bei denen Kontaktpunkte des funktionselement-haltenden Drehelements 126 mit einem Abrollelement 144 und/oder mit einem Übertragungselement 142 und/oder mit dem Steuerungselement 124 oder Kontaktpunkte des Steuerungselements 124 mit einem Abrollelements 144 und/oder einem mit einem Drehelement 126 und/oder mit einem Übertragungselement 142 bei einer Projektion in eine Ebene senkrecht zu einer Lenkachse des Lenkrohrs und/oder zu einer eigenen Drehachse einen lenkwinkelabhängigen Radius beschreiben.

Figur 18 zeigt für eine beispielhafte Ausführungsform, bei der das funktionselementhaltende Drehelement 126 direkt oder mittelbar mit dem Lenkrohr 116 verbunden ist, einer Lampe als Funktionselement die Verläufe der Leuchtweite in Abhängigkeit vom Leuchtwinkel bei verschiedenen Neigungen der Drehachse 139 des Drehelements 126 gegenüber der Vertikalen. Die Leuchtweite entspricht in diesem Fall der Funktionsreichweite des Funktionselements. Auf der Y-Achse ist die Leuchtweite in m aufgetragen. Auf der X-Achse ist der Ausrichtungswinkel des Funktionselements β in ° (Grad) aufgetragen. Die als "000" gekennzeichnete Kurve der Kurvenschar beschreibt den Verlauf der Leuchtweite bei einer Übersetzung der Rotationsbewegung des Drehelements 126 und der Rotationsbewegung des Lenkrohrs 116 von 0, was einem Übersetzungsverhältnis von etwa 1 entspricht, und einer Neigung der Lenkachse 114 von 20° nach hinten gegenüber der Vertikalen. Für die weiteren Kurven, die mit ihrem Neigungswinkel der Drehachse 139 des Drehelements 126 gegenüber der Vertikalen bezeichnet sind, wurde eine Übersetzung der Rotationsbewegung des Drehelements 126 und der Rotationsbewegung des Lenkrohrs 116 von 1 gewählt, was einem Übersetzungsverhältnis von etwa 2 entspricht. Beispielsweise bezeichnet die Kurve mit der Bezeichnung 40 einen Verlauf der Leuchtweite in Abhängigkeit vom Winkel β für eine Neigung der Drehachse 139 des Drehelements 126 gegenüber der Vertikalen von 40°. Zu Erläuterungszwecken sei erwähnt, dass davon ausgegangen wird, dass sich das Fahrzeug bei einer Kurvenfahrt nicht nach innen neigt, da die Neigung nach innen eine Folge der Zentrifugalkraft und damit abhängig von der Fahrgeschwindigkeit ist. Die in Figur 18 gezeigten Kurven beschreiben also den Fall des Grenzwerts für eine Fahrgeschwindigkeit von 0 km/h. Bei höheren Geschwindigkeiten ist das Rad in die Kurve geneigt, was die Leuchtweite zusätzlich reduziert. Die Leuchtweite bei Geradeausfahrt ist auf etwa 10 m ausgelegt. Optimal scheint ein Winkel von ca. 15° bis 40° bzw. 60° bis 80° gegenüber der Vertikalen nach vorne. Bei zu geringer Neigung nach vorne ist der Effekt der Leuchtweitenreduzierung nur gering, mit zunehmender Neigung geht die Leuchtweite bei großen Lenkwinkeln nach oben, was den Gegenverkehr blenden könnte.

Es sei erwähnt, dass bei Parallelität der Vertikalen mit der Lenkachse 114 und der Drehachse 139 ein konstantes Übersetzungsverhältnis i=β/α, welches sich aus dem Quotienten des Ausrichtungswinkels des Funktionselements β und dem Lenkwinkel α ergibt, identisch ist mit der Übersetzung der Rotationsbewegung des funktionselement-haltenden Drehelements 126 und der Rotationsbewegung des Lenkrohrs 116. Bei gegenüber der Vertikalen geneigter Lenkachse 114 und/oder geneigter Drehachse 139 kann i von der Übersetzung der Rotationsbewegung Drehelements 126 und der Rotationsbewegung des Lenkrohrs 116 abweichen. Insbesondere ist bei nach hinten geneigter Lenkachse 114 der Ausrichtungswinkel des Funktionselements β reduziert. Dies wird anschaulich aus der Kurve 000. Obwohl die Punkte verschiedene Lenkwinkel im Bereich von α=0° bis 75° darstellen, ist der maximale Ausrichtungswinkel des Funktionselements β geringer als 75°. Die Endpunkte der Kurven in Figur 18 zeigen jeweils den Winkel β bei einem Lenkwinkel von α=75°. Die Kurven veranschaulichen, dass das Übersetzungsverhältnis i mit zunehmendem Neigungswinkel der Drehachse 139 gegenüber der Vertikalen abnimmt.

Es wird explizit betont, dass bei jeder der hierin beschriebenen Ausführungsformen die Drehachse 139 des Drehelements 126 gegenüber der Lenkachse 114 und/oder einer Vertikalen nach vorne bzw. in Fahrtrichtung geneigt sein kann. Dabei kann die Neigung der Drehachse 139 des Drehelements 126 mit einer Ausbildung zur Änderung des Übersetzungsverhältnisses kombiniert sein oder separat vorgesehen sein.

Die zuvor beschriebenen Ausführungsformen können wie folgt modifiziert werden. Die Bowdenzugseelen können als elektrische Zuleitung ausgebildet sein, insbesondere bei Vorsehen von zwei Bowdenzügen 148, 148', so dass Kabel fest verlegt werden können. Alternativ sind im Drehelement 126 auch Schleifkontakte für die elektrische Zuleitung möglich. Scheinwerfer und Halteelement können unabhängig voneinander neigbar sein. Falls die Drehachse 139 des Drehelements 126 als Gewindestange mit großem Gewindegang ausführt, ist eine Änderung der Neigung der Drehachse 139 des Drehelements 126 in Abhängigkeit vom Lenkwinkel möglich, da sich dann mit Lenkung das Drehelement 126 der Drehachse 139 entlang hoch- bzw. runterschraubt. Es können auch mehrere Abrollelemente verwendet werden, wie beispielsweise ein Seil um den Rahmen 112, dann Übertragung auf ein Hydraulikelement und vom Hydraulikelement wieder auf ein Seil. Die drehbare Lagerung eines Drehelements oder weiterer Elemente kann beispielsweise mit einem Kugel- oder Gleitlager realisiert werden.

### Bezugszeichenliste

- 110: Fahrzeug mit Gabellenkung
- 112: Rahmen
- 114: Lenkachse
- 116: Lenkrohr
- 118: Halter
- 120: Funktionselement
- 122: Fahrzeugsystem
- 124: Steuerungselement
- 126: (erstes) Drehelement
- 126': zweites Drehelement
- 128: Halteelement
- 130: Fahrtrichtungssachse
- 132: Rahmen-Ausrichtungsachse
- 134: Ausrichtung des Funktionselements
- 136: Winkel α
- 138: Winkel β
- 139: Drehachse des Drehelements
- 140: Trägerelement
- 142: Übertragungselement
- 144: Abrollelement
- 146: erste Bowdenzugseele
- 146': zweite Bowdenzugseele
- 148: erste Bowdenzughülle
- 148': zweite Bowdenzughülle
- 150: Drehelementhalter
- 152: erste Aufnahme für eine erste Bowdenzughülle
- 152': erste Aufnahme für eine zweite Bowdenzughülle
- 153: zweite Aufnahme für eine erste Bowdenzughülle
- 153': zweite Aufnahme für eine zweite Bowdenzughülle
- 154: Federgabel
- 156: Schwinge
- 158: erster Steuerungselementteil
- 158': zweiter Steuerungselementteil
- 160: Klemme
- 162: erster Befestigungspunkt für eine erste Bowdenzugseele
- 162': erster Befestigungspunkt für eine zweite Bowdenzugseele
- 163: zweiter Befestigungspunkte für eine erste Bowdenzugseele
- 163': zweiter Befestigungspunkt für eine zweite Bowdenzugseele
- 165: erste Führung
- 165': zweite Führung
- 164: erster Anschlag
- 164': zweiter Anschlag
- 166: erstes Zahnrad
- 166': zweites Zahnrad
- 166": drittes Zahnrad
- 168: gemeinsame Drehachse
- 170: Umlaufgetriebe
- 172: Planetengetriebe
- 174: erste Innenverzahnung
- 174': zweite Innenverzahnung
- 176: Feder
- 178: Expanderseil
- 180: Vorsprung
- 182: Aufnahme
- 184: Lichtstrahl
- 186: Projektion
- 188: Kontaktpunkte des Drehelements
- 188': Kontaktpunkte des Abrollelements

## Patentansprüche

1. Halter (118) zur Anpassung einer Ausrichtung (134) eines zu haltenden Funktionselements (120) an eine Lenkstellung eines Fahrzeugs (110) mit Gabellenkung, umfassend:
- mindestens ein Steuerungselement (124), wobei das Steuerungselement (124) zumindest teilweise ein Lenkrohr (116) der Gabellenkung des Fahrzeugs (110) umfasst oder mit dem Lenkrohr (116) direkt oder mittelbar starr verbindbar ist;
- mindestens ein gegenüber dem Steuerungselement (124) drehbar angeordnetes Drehelement (126); und
- mindestens ein mit dem Drehelement (126) verbundenes Halteelement (128) an dem das zu haltende Funktionselement (120) befestigbar ist,
wobei das Drehelement (126) und das Steuerungselement (124) derart angeordnet sind, dass eine durch eine Einlenkbewegung des Steuerungselements (124) bewirkte Drehbewegung des Drehelements (126) eine die Einlenkbewegung verstärkende Bewegung des Halteelements (128) bewirkt, **dadurch gekennzeichnet, dass** eine Drehachse (139) des Drehelements (126), welches mit dem Halteelement (128) verbunden ist, gegenüber einer Lenkachse (114) des Lenkrohrs (116) nach vorne neigbar ist.

2. Halter (118) nach dem vorhergehenden Anspruch, wobei die durch die Einlenkbewegung des Steuerungselements (124) bewirkte Drehbewegung des Drehelements (126) und die verstärkende Bewegung des Halteelements (128) von einem Lenkwinkel des Lenkrohrs (116) abhängt, wobei die verstärkende Bewegung des Halteelements (128) insbesondere in einem Lenkwinkelbereich von 1° bis 25° größer ist als in einem Lenkwinkelbereich von 45° von 90° und insbesondere in einem Abschnitt eines Lenkwinkels eine konstante Übersetzung der Rotationsbewegung des Drehelements (126) und der Rotationsbewegung des Lenkrohrs (116) aufweist.

3. Halter (118) nach einem der vorhergehenden Ansprüche, wobei das Drehelement (126) derart angeordnet ist, dass es die Drehbewegung um einen Rahmen (112) des Fahrzeugs (110) oder um mindestens ein starr mit dem Rahmen (112) direkt oder mittelbar verbindbares Trägerelement (140) ausführt.

4. Halter (118) nach einem der Ansprüche 1 bis 2, wobei das Steuerungselement (124) zumindest teilweise fingerförmig ausgebildet ist, wobei das Drehelement (126) konzentrisch um den fingerförmig ausgebildeten Teil des Steuerungselements (124) angeordnet ist, sodass eine Bewegung des Steuerungselements (124) eine Bewegung des Drehelements (126) um die Drehachse (139) bewirkt.

5. Halter (118) nach einem der vorhergehenden Ansprüche, wobei die Drehbewegung des Drehelements (126) eine Abrollbewegung gegenüber einem Rahmen (112) des Fahrzeugs (110) oder gegenüber mindestens einem mit dem Rahmen (112) verbindbaren Abrollelement (144) ist.

6. Halter (118) nach einem der vorhergehenden Ansprüche, weiterhin umfassend mindestens ein Übertragungselement (142) zur Übertragung der Bewegung, insbesondere der Einlenkbewegung, des Steuerungselements (124) auf das mindestens eine Drehelement (126).

7. Halter (118) nach einem der vorhergehenden Ansprüche,
- wobei Kontaktpunkte des funktionselement-haltenden Drehelements (126) mit einem Abrollelement (144) und/oder mit einem Übertragungselement (142) und/oder mit dem Steuerungselement (124)
- oder Kontaktpunkte des Steuerungselements (124) mit einem Abrollelements (144) und/oder einem mit einem Drehelement (126) und/oder mit einem Übertragungselement (142) bei einer Projektion in eine Ebene senkrecht zu einer Lenkachse des Lenkrohrs und/oder zu einer eigenen Drehachse einen lenkwinkelabhängigen Radius beschreiben.

8. Halter (118) nach einem der Ansprüche 6 bis 7, wobei das Steuerungselement (124) und/oder mindestens ein Übertragungselement (142) und oder ein Abrollelement (144) und/oder ein Drehelement (126) derart beweglich ist, dass zumindest in einem Bereich der Lenkwinkel sich ein lenkwinkelabhängiges Übersetzungsverhältnis ergibt.

9. Halter (118) nach einem der vorhergehenden Ansprüche, wobei das Steuerungselement (124), das mindestens eine Drehelement (126) ausgewählt ist aus der Gruppe bestehend aus: einem Zahnrad, beispielsweise einem zumindest einen Teilkreis bildenden Zahnkranz; einem Reibrad, beispielsweise einem eine Reiboberfläche aufweisenden zumindest einen Teilkreis bildenden Reibkranz; einem Kegelzahnrad; Kegelreibrad; einem Sektor eines Kegelzahnrads; einem Sektor eines Kegelreibrads und wobei eines der optional vorhandenen Abrollelemente (144) und/oder eines der optional vorhandenen Übertragungselemente (142) weiterhin ausgewählt sein kann aus der Gruppe bestehend aus: einem Zahnrad, beispielsweise einem zumindest einen Teilkreis bildenden Zahnkranz; einem Reibrad, beispielsweise einem eine Reiboberfläche aufweisenden zumindest einen Teilkreis bildenden Reibkranz; einer Zahnscheibe; einer Schnur; einer Angelsehne; einem Drahtseil; einer Litze; einem Gummizug; einem Bowdenzug, insbesondere einer Bowdenzugseele verbunden mit einer Bowdenzughülle; einem Band.

10. Halter (118) nach einem der vorhergehenden Ansprüche 2 bis 9, wobei eine Änderung eines Übersetzungsverhältnisses zwischen einer Drehstellung des Drehelements (126) und einer Lenkstellung des Lenkrohrs (116) bewirkt ist durch:
- ein Übertragungselement (142), welches eingerichtet ist, nur in einem vorbestimmten Lenkwinkelbereich zu wirken,
- einer Kombination von Zahnrad- oder Reibradteilkreisen mit unterschiedlichen Radien, die in bestimmten Lenkwinkelbereichen arbeiten,
- durch Begrenzungen der Bewegung eines der Elemente aus der Gruppe von Steuerungselement (124), Abrollelement (144), Übertragungselement (142), Drehelement (126),
- durch Elemente, die in Bereichen der Lenkwinkel in ihrer Bewegung durch eine Rückstellkraft an der Bewegung gehindert werden, so dass die Verstärkung der Einlenkbewegung abhängig ist vom Lenkwinkel in Kombination mit einem Drehelement (126), welches nur bis zu einem bestimmten Winkel, bevorzugt zwischen 90 ° und 180 ° beweglich ist,
- durch lenkwinkelabhängige Radien von Abrollelement (144), Übertragungselement (142) und/oder Drehelement (126), und/oder
- durch ein Steuerungselement (124), welches eingerichtet ist, die Lenkwinkelbewegung nur in einem begrenzten Bereich kleiner Lenkwinkel, vorzugsweise im Bereich von 0° bis 45°, vorzugsweise im Bereich von 0° bis 25° zu übertragen, und ein Drehelement (126), welches bei größeren Lenkwinkeln in der Position der Auskopplung der Bewegung gehalten wird durch ein Element mit einer Rückstellkraft, vorzugsweise durch eine Feder, eine Klammer, ein Gummi- oder Expanderseil.

11. Halter (118) nach einem der vorhergehenden Ansprüche, wobei die Drehachse (139) des Drehelements (126), welches mit dem Halteelement (128) verbunden ist, gegenüber einer Lenkachse (114) des Lenkrohrs (116) nach vorne geneigt ist, bevorzugt gegenüber der Vertikalen nach vorne geneigt ist, bevorzugt gegenüber der Vertikalen um 15° bis 40° nach vorne geneigt ist.

12. Datenträger mit Instruktionen oder Druckdatensatz umfassend Informationen, die, wenn sie auf einer Vorrichtung zur additiven Fertigung ausgeführt werden bzw. wenn sie einer Vorrichtung zur additiven Fertigung zur Verfügung gestellt werden, die Vorrichtung zur additiven Fertigung veranlassen, einen Halter (118) gemäß einem der vorherigen Ansprüche herzustellen.

13. Fahrzeugsystem (122) umfassend einen Halter (118) gemäß einem der vorhergehenden, einen Halter (118) betreffenden Ansprüche sowie das zu haltende Funktionselement (120), wobei das zu haltende Funktionselement (120) ausgewählt ist aus der Gruppe bestehend aus: einer Lampe, beispielsweise einer elektrisch betriebenen Lampe, beispielsweise einer Taschenlampe oder einer über einen Dynamo betriebenen Lampe; einer Leuchte, einem Fahrradscheinwerfer, einem Sensor, beispielsweise einem Abstandssensor, einem Kamerasensor.

14. Fahrzeug (110) mit Gabellenkung umfassend einen Rahmen (112), einen gegenüber dem Rahmen (112) um eine Lenkachse (114) drehbares Lenkrohr (116) und einen Halter (118) gemäß einer der vorhergehenden einen Halter (118) betreffenden Ansprüche und/oder ein Fahrzeugsystem (122) nach dem vorhergehenden Anspruch.

15. Fahrzeug (110) nach dem vorhergehenden Anspruch, wobei das Funktionselement eine vorbestimmte Neigung im Raum aufweist, wobei die Drehachse (139) des Drehelements (126) derart angeordnet ist, dass ein Abstand von einem Schnittpunkt einer imaginären Verlängerung der Neigung des Funktionselements mit einem Untergrund des Fahrzeugs zum Schnittpunkt einer Projektion des Funktionselements senkrecht zu einem Untergrund des Fahrzeugs bei einer Einlenkung weniger reduzierbar ist als bei einer parallelen Ausrichtung einer Lenkachse (114) des Lenkrohrs (116) und der Drehachse (139), vorzugsweise dass der Abstand bei aufrechtem Fahrzeug in einem Lenkwinkelbereich von 1° bis 75° maximal um 75%, vorzugsweise maximal um 60% gegenüber einer Geradeausfahrt reduzierbar ist und nicht verlängert ist.

## Claims

1. Holder (118) for adapting an alignment (134) of a functional element (120) to be held to a steering position of a vehicle (110) with fork steering, comprising
- at least one control element (124), wherein the control element (124) at least partially comprises a steering tube (116) of the fork steering of the vehicle (110) or is rigidly connectable directly or indirectly to the steering tube (116),
- at least one rotating element (126) arranged rotably relative to the control element (124), and
- at least one holding element (128) connected to the rotating element (126), to which the functional element (120) to be held can be fastened,
wherein the rotating element (126) and the control element (124) are arranged in such a way that a rotational movement of the rotating element (126) caused by a steering movement of the control element (124) causes a movement of the holding element (128) which amplifies the steering movement, **characterised in that** an axis of rotation (139) of the rotating element (126), which is connected to the holding element (128), is tiltable forwards relative to a steering axis (114) of the steering tube (116).

2. Holder (118) according to the preceding claim, wherein the rotational movement of the rotating element (126) caused by the steering-in movement of the control element (124) and the amplifying movement of the holding element (128) depend on a steering angle of the steering tube (116), wherein the amplifying movement of the holding element (128) is in particular greater in a steering angle range of 1° to 25° than in a steering angle range of 45° of 90° and in particular in a section of a steering angle has a constant ratio of the rotational movement of the rotating element (126) and the rotational movement of the steering tube (116).

3. Holder (118) according to one of the preceding claims, wherein the rotating element (126) is arranged such that it performs the rotational movement about a frame (112) of the vehicle (110) or about at least one support element (140) that is rigidly connectable to the frame (112) directly or indirectly.

4. Holder (118) according to one of claims 1 to 2, wherein the control element (124) is at least partially finger-shaped, wherein the rotating element (126) is arranged concentrically around the finger-shaped part of the control element (124), so that a movement of the control element (124) causes a movement of the rotating element (126) about the axis of rotation (139).

5. Holder (118) according to one of the preceding claims, wherein the rotational movement of the rotating element (126) is a rolling movement relative to a frame (112) of the vehicle (110) or relative to at least one rolling element (144) connectable to the frame (112).

6. Holder (118) according to one of the preceding claims, further comprising at least one transmission element (142) for transmitting the movement, in particular the steering-in movement, of the control element (124) to the at least one rotating element (126).

7. Holder (118) according to one of the preceding claims,
- wherein contact points of the rotating element (126) holding the functional element with an rolling element (144) and/or with a transmission element (142) and/or with the control element (124)
- or contact points of the control element (124) with an rolling element (144) and/or
with a rotating element (126) and/or with a transmission element (142) describe a steering angle-dependent radius when projected into a plane perpendicular to a steering axis of the steering tube and/or to its own axis of rotation.

8. Holder (118) according to one of claims 6 to 7, wherein the control element (124) and/or at least one transmission element (142) and/or a rolling element (144) and/or a rotating element (126) is movable in such a way that at least in a range of steering angles a steering angle-dependent transmission ratio results.

9. Holder (118) according to one of the preceding claims, wherein the control element (124), the at least one rotating element (126) is selected from the group comprising: a gear wheel, for example a gear ring forming at least a circle segment; a friction wheel, for example a friction ring forming at least a circle segment and having a friction surface; a bevel gear wheel; a bevel friction wheel; a sector of a bevel gear wheel; a sector of a bevel friction wheel and wherein one of the optionally present rolling elements (144) and/or one of the optionally present transmission elements (142) may further be selected from the group comprising: a gear wheel, for example a gear ring forming at least a circle segment; a friction wheel, for example a friction ring forming at least a circle segment and having a friction surface; a toothed disc; a cord; a fishing line; a wire rope; a strand; a rubber cord; a Bowden line, in particular a Bowden core connected to a Bowden sheath; a belt.

10. Holder (118) according to any one of the preceding claims 2 to 9, wherein a change of a transmission ratio between a rotational position of the rotating element (126) and a steering position of the steering tube (116) is effected by:
- a transmission element (142) which is arranged to operate only in a predetermined steering angle range,
- a combination of gear wheel or friction wheel circle segments with different radii operating in certain steering angle ranges,
- by limitating the movement of one of the elements from the group of control element (124), rolling element (144), transmission element (142), rotating element (126),
- by elements which are prevented from moving in ranges of steering angles by a restraining force, so that the amplification of the steering movement is dependent on the steering angle in combination with a rotating element (126), which is only movable up to a certain angle, preferably between 90° and 180°,
- by steering angle-dependent radii of the rolling element (144), transmission element (142) and/or rotating element (126), and/or
- by a control element (124) which is set up to transmit the steering angle movement only in a limited range of small steering angles, preferably in the range from 0° to 45°, preferably in the range from 0° to 25°, and a rotating element (126) which is held in the position of decoupling of the movement at larger steering angles by an element with a restraining force, preferably by a spring, a clamp, a rubber or expander cable.

11. Holder (118) according to one of the preceding claims, wherein the axis of rotation (139) of the rotating element (126), which is connected to the holding element (128), is tilted forwards with respect to a steering axis (114) of the steering tube (116), preferably tilted forwards with respect to the vertical, preferably tilted forwards with respect to the vertical by 15° to 40°.

12. Data carrier with instructions or print data set comprising information which, when executed on or provided to an additive manufacturing device, causes the additive manufacturing device to produce a holder (118) according to any of the preceding claims.

13. Vehicle system (122) comprising a holder (118) according to any one of the preceding claims relating to a holder (118) and the functional element (120) to be held, wherein the functional element (120) to be held is selected from the group comprising: a lamp, for example an electrically powered lamp, for example a torch or a dynamo powered lamp; a light, a bicycle headlight, a sensor, for example a distance sensor, a camera sensor.

14. Vehicle (110) with fork steering comprising a frame (112), a steering tube (116) rotatable relative to the frame (112) about a steering axis (114) and a holder (118) according to one of the preceding claims relating to a holder (118) and/or a vehicle system (122) according to the preceding claim.

15. Vehicle (110) according to the preceding claim, wherein the functional element has a predetermined inclination in space, wherein the axis of rotation (139) of the rotating element (126) is arranged such that a distance from a point of intersection of an imaginary extension of the inclination of the functional element with a ground of the vehicle to the point of intersection of a projection of the functional element perpendicular to a ground of the vehicle is less reducible upon a turn-in than when a steering axis (114) of the steering tube (116) and the axis of rotation (139) are aligned in parallel, preferably that the distance can be reduced in a steering angle range of 1° to 75° by a maximum of 75%, preferably by a maximum of 60%, compared to straight-ahead travel with an upright vehicle, and is not extended.

## Revendications

1. Support (118) pour adapter une orientation (134) d'un élément fonctionnel (120) à maintenir à une position de direction d'un véhicule (110) avec direction à fourche, comprenant
- au moins un élément de commande (124), l'élément de commande (124) comprenant au moins partiellement un tube de direction (116) de la direction à fourche du véhicule (110) ou pouvant être relié de manière rigide directement ou indirectement au tube de direction (116),
- au moins un élément rotatif (126) disposé de manière à pouvoir tourner par rapport à l'élément de commande (124), et
- au moins un élément de maintien (128) relié à l'élément rotatif (126), sur lequel l'élément fonctionnel (120) à maintenir peut être fixé,
l'élément rotatif (126) et l'élément de commande (124) étant disposés de telle sorte qu'un mouvement de rotation de l'élément rotatif (126) provoqué par un mouvement de braquage de l'élément de commande (124) provoque un mouvement de l'élément de maintien (128) amplifiant le mouvement de braquage, **caractérisé en ce qu'**un axe de rotation (139) de l'élément rotatif (126), qui est relié à l'élément de maintien (128), peut être incliné vers l'avant par rapport à un axe de direction (114) du tube de direction (116).

2. Support (118) selon la revendication précédente, dans lequel le mouvement de rotation de l'élément rotatif (126) provoqué par le mouvement de braquage de l'élément de commande (124) et le mouvement d'amplification de l'élément de maintien (128) dépendent d'un angle de direction du tube de direction (116), le mouvement amplificateur de l'élément de maintien (128) étant notamment plus important dans une plage d'angles de braquage de 1° à 25° que dans une plage d'angles de braquage de 45° à 90° et présentant notamment dans une section d'un angle de braquage un rapport constant du mouvement de rotation de l'élément rotatif (126) et du mouvement de rotation du tube de direction (116).

3. Support (118) selon l'une des revendications précédentes, dans lequel l'élément rotatif (126) est agencé de manière à effectuer le mouvement de rotation autour d'un châssis (112) du véhicule (110) ou autour d'au moins un élément de support (140) pouvant être relié de facon rigide, directement ou indirectement, au châssis (112).

4. Support (118) selon l'une des revendications 1 à 2, dans lequel l'élément de commande (124) est au moins partiellement en forme de doigt, l'élément rotatif (126) étant disposé concentriquement autour de la partie en forme de doigt de l'élément de commande (124), de sorte qu'un mouvement de l'élément de commande (124) provoque un mouvement de l'élément rotatif (126) autour de l'axe de rotation (139).

5. Support (118) selon l'une des revendications précédentes, dans lequel le mouvement de rotation de l'élément rotatif (126) est un mouvement de roulement par rapport à un châssis (112) du véhicule (110) ou par rapport à au moins un élément de roulement (144) pouvant être relié au châssis (112).

6. Support (118) selon l'une des revendications précédentes, comprenant en outre au moins un élément de transmission (142) pour transmettre le mouvement, notamment le mouvement de braquage, de l'élément de commande (124) à sur au moins un élément rotatif (126).

7. Support (118) selon l'une des revendications précédentes,
- dans lequel des points de contact de l'élément rotatif (126) supportant l'élément fonctionnel avec un élément de roulement (144) et/ou avec un élément de transmission (142) et/ou avec l'élément de commande (124)
- ou des points de contact de l'élément de commande (124) avec un élément de roulement (144) et/ou avec un élément rotatif (126) et/ou avec un élément de transmission (142)
décrivent un rayon dépendant de l'angle de braquage en cas de projection dans un plan perpendiculaire à un axe de direction du tube de direction et/ou à un axe de rotation propre.

8. Support (118) selon l'une des revendications 6 à 7, dans lequel l'élément de commande (124) et/ou au moins un élément de transmission (142) et ou un élément de roulement (144) et/ou un élément rotatif (126) sont mobiles de telle sorte qu'il en résulte un rapport de transmission dépendant de l'angle de braquage au moins dans une plage des angles de braquage.

9. Support (118) selon l'une des revendications précédentes, dans lequel l'élément de commande (124), l'au moins un élément rotatif (126) est choisi dans le groupe comprenant: une roue dentée, par exemple une couronne dentée formant au moins un cercle primitif; une roue de friction, par exemple une couronne de friction formant au moins un cercle primitif et présentant une surface de friction; une roue dentée conique; une roue de friction conique; un secteur d'une roue dentée conique; un secteur d'une roue de friction conique et dans lequel l'un des éléments de roulement (144) éventuellement présents et/ou l'un des éléments de transmission (142) éventuellement présents peut en outre être choisi dans le groupe comprenant: une roue dentée, par exemple une couronne dentée formant au moins un cercle partiel; une roue de friction, par exemple une couronne de friction présentant une surface de friction et formant au moins un cercle partiel; une poulie dentée; un cordon; une fil de pêche; un câble métallique; un toron; un élastique; une systeme Bowden, en particular un fil Bowden conlissont dans une gaine Bowden souple; une bande.

10. Support (118) selon l'une des revendications précédentes 2 à 9, dans lequel une modification d'un rapport de transmission entre une position de rotation de l'élément rotatif (126) et une position de direction du tube de direction (116) est effectuée par :
- un élément de transmission (142) adapté pour agir uniquement dans une plage d'angles de braquage prédéterminée,
- une combinaison de cercles partiels de roues dentées ou de roues de friction de différents rayons qui fonctionnent dans certaines plages d'angles de braquage,
- par des limitations du mouvement de l'un des éléments du groupe d'éléments de commande (124), élément de roulement (144), élément de transmission (142), élément rotatif (126),
- par des éléments qui, dans des zones d'angles de braquage, sont empêchés de se déplacer par une force de rappel, de sorte que l'amplification du mouvement de braquage dépend de l'angle de braquage en combinaison avec un élément rotatif (126), qui n'est mobile que jusqu'à un certain angle, de préférence entre 90° et 180°,
- par des rayons de l'élément de roulement (144), de l'élément de transmission (142) et/ou de l'élément rotatif (126) qui dépendent de l'angle de braquage, et/ou
- par un élément de commande (124) qui est aménagé de manière à ne permettre le mouvement de l'angle de braquage que dans une plage limitée de à petits angles de braquage, de préférence dans la plage de 0° à 45°, de préférence dans la plage de 0° à 25°, et un élément rotatif (126) qui, pour des angles de braquage plus importants, est maintenu dans la position de découplage du mouvement par un élément présentant une force de rappel, de préférence par un ressort, une pince, un câble en caoutchouc ou un câble extenseur.

11. Support (118) selon l'une des revendications précédentes, dans lequel l'axe de rotation (139) de l'élément rotatif (126) relié à l'élément de maintien (128) est incliné vers l'avant par rapport à un axe de direction (114) du tube de direction (116), de préférence est incliné vers l'avant par rapport à la verticale, de préférence est incliné vers l'avant de 15° à 40° par rapport à la verticale.

12. Support d'instructions ou d'impression comprenant des informations qui, lorsqu'elles sont exécutées sur un dispositif de fabrication additive ou lorsqu'elles sont mises à disposition d'un dispositif de fabrication additive, amènent le dispositif de fabrication additive à réaliser un support (118) selon l'une des revendications précédentes.

13. Système de véhicule (122) comprenant un support (118) selon l'une des revendications précédentes concernant un support (118) et l'élément fonctionnel (120) à supporter, l'élément fonctionnel (120) à supporter étant choisi dans le groupe comprenant: une lampe, par exemple une lampe alimentée électriquement, par exemple une lampe de poche ou une lampe alimentée par une dynamo; une lampe, un phare de vélo, un capteur, par exemple un capteur de distance, un capteur de caméra.

14. Véhicule (110) à fourche directionnelle comprenant un châssis (112), un tube de direction (116) rotatif par rapport au châssis (112) autour d'un axe de direction (114) et un support (118) selon l'une des revendications précédentes concernant un support (118) et/ou un système de véhicule (122) selon la revendication précédente.

15. Véhicule (110) selon la revendication précédente, dans lequel l'élément fonctionnel présente une inclinaison prédéterminée dans l'espace, l'axe de rotation (139) de l'élément rotatif (126) étant agencé de telle sorte qu'une distance entre un point d'intersection d'un prolongement imaginaire de l'inclinaison de l'élément fonctionnel avec un sol du véhicule et le point d'intersection d'une projection de l'élément fonctionnel perpendiculaire à un sol du véhicule est moins réductible lors d'un braquage que lorsqu'un axe de direction (114) du tube de direction (116) et l'axe de rotation (139) sont parallèles, de préférence que la distance peut être réduite au maximum de 75%, de préférence au maximum de 60%, par rapport à une conduite en ligne droite, lorsque le véhicule est à l'arrêt, dans une plage d'angles de braquage de 1° à 75°, et qu'elle n'est pas allongée.
